**Europäisches Patentamt**

(19) **European Patent Office**

**Office européen des brevets**

(11) Veröffentlichungsnummer: **0 149 658**
**B1**

(12) # EUROPÄISCHE PATENTSCHRIFT

(45) Veröffentlichungstag der Patentschrift:
**15.10.86**

(51) Int. Cl.⁴: **B 65 G 13/06**

(21) Anmeldenummer: **84902790.9**

(22) Anmeldetag: **16.07.84**

(86) Internationale Anmeldenummer:
**PCT/DE 84/00149**

(87) Internationale Veröffentlichungsnummer:
**WO 85/00577 (14.02.85 Gazette 85/04)**

(54) **ROLLENANTRIEBSEINHEIT.**

(30) Priorität: **21.07.83 DE 3326355**

(43) Veröffentlichungstag der Anmeldung:
**31.07.85 Patentblatt 85/31**

(45) Bekanntmachung des Hinweises auf die Patenterteilung:
**15.10.86 Patentblatt 86/42**

(84) Benannte Vertragsstaaten:
**DE FR GB**

(56) Entgegenhaltungen:
**DE-A-1 956 946**
**FR-A-2 414 663**

(73) Patentinhaber: **ELECTRO- PNEUMATIC-INTERNATIONAL GMBH, Obere Tiefenbachstrasse 8, D-8164 Hausham (DE)**

(72) Erfinder: **HUBER, Thomas, Schechen 2, D-8127 Iffeldorf (DE)**

(74) Vertreter: **Uri, Peter Alexander, Dipl.- Ing., Patentanwälte Strohschänk, Uri & Strasser Innere Wiener Strasse 8, D-8000 München 80 (DE)**

EP 0 149 658 B1

## Beschreibung

Die Erfindung betrifft eine Rollenantriebseinheit zum Antrieb von auf einer Förderbahn bewegbaren Gegenständen, mit wenigstens einer von einem Motor über wenigstens eine das Antriebsdrehmoment übertragende Getriebeanordnung drehend antreibbaren Antriebsrolle, die mit ihrer Antriebswelle drehbar in einer Führungseinrichtung gelagert ist, mittels der sie bezüglich einer Basis auf einem kreisbogenförmigen Bewegungspfad verschwenkbar ist, und die mittels einer Steuereinrichtung auf dem kreisbogenförmigen Bewegungspfad zwischen einer unteren Ruhestellung und einer oberen Antriebsstellung, in der sie mit der Unterseite des anzutreibenden Gegenstandes im Eingriff steht, bewegbar ist, wobei die Steuereinrichtung eine zur Übertragung eines begrenzten Drehmoments zwischen der Getriebeanordnung und der Führungseinrichtung ausgebildete Kupplungsvorrichtung umfaßt und der Grenzwert des Drehmoments größer ist als das zur Anhebung der Antriebsrolle in die Arbeitsstellung erforderliche Antriebsdrehmoment, und wobei die Getriebeanordnung ein vom Motor angetriebenes erstes Getrieberad umfaßt, das ein an der Antriebswelle der Antriebsrolle drehfest angebrachtes zweites Getrieberad gegensinnig antreibt.

Derartige Rollenantriebseinheiten werden beispielsweise zum Antrieb von auf Rollenförderbahnen bewegbaren Frachtbehältern, wie Frachtcontainern oder -paletten eingesetzt. Ein bevorzugtes Anwendungsgebiet sind Frachtladesysteme im Luftfrachtverkehr, bei denen die Container im Laderaum eines Flugzeuges auf Rollen- oder Kugelförderbahnen an die vorgesehenen Verankerungsplätze im Laderaum transportiert werden.

Eine derartige Rollenantriebseinheit ist in der DE-PS 1 956 946 beschrieben. Diese bekannte Einheit weist einen am Boden des Frachtraums zu befestigenden Grundrahmen und ein an einem Ende schwenkbar am Grundrahmen gelagertes Lagergestell auf, das in der Nähe der Schwenkachse einen Motor trägt und im Abstand zur Schwenkachse eine drehbar, jedoch bezüglich des Lagergestells ortsfest gelagerte Antriebsrolle, sowie eine mit dem freien Ende des Lagergestells verbundene Nockensteueranordnung mittels der das Lagergestell bezüglich des Grundrahmens aus der Ruhestellung in die Arbeitsstellung verschwenkbar ist. Die Abtriebswelle des Motors ist über einen Getriebezug mit dem Eingang eines Planetengetriebes gekoppelt, dessen einer Ausgang über eine Getriebeanordnung mit der Antriebswelle der Antriebsrolle gekoppelt ist, während der andere Ausgang des Planetengetriebes die Nockensteuereinheit antreibt.

Im Ruhezustand liegt das Lagergestell auf dem Grundrahmen auf, so daß die Antriebsrolle abgesenkt im Abstand zum Boden eines darüber auf einer Rollenförderbahn herangeführten Frachtbehälters steht. Um den Frachtbehälter auf der Rollenbahn in Bewegung zu setzen, wird zunächst der Motor eingeschaltet, der den Eingang des Planetengetriebes antreibt. Zu diesem Zeitpunkt wird die Antriebsrolle mittels einer Rutschkupplung mit einem vorbestimmten Bremsdrehmoment gegen Drehung festgehalten, so daß das Antriebsdrehmoment des Motors über den anderen Ausgang des Planetengetriebes auf die Nockensteuereinheit einwirkt, die dadurch mit ihren Nocken, die sich an dem Grundrahmen abstützen, das Lagergestell nach oben in die Arbeitsstellung schwenkt, bis die Antriebsrolle in Eingriff mit der Unterseite des Bodens des Frachtbehälters gelangt. Wegen des Gewichtes des Frachtbehälters wird dadurch die Bewegung der Nockensteuereinheit blockiert und die Antriebsrolle wird in zunehmendem Maße gegen den Behälterboden gedrückt. Dadurch wird aber auch der die Nockensteuereinheit treibende Ausgang des Planetengetriebes blockiert, so daß der die Antriebsrolle antreibende Ausgang des Planetengetriebes in immer stärkerem Maße auf die Antriebsrolle ein Drehmoment überträgt, bis der Grenzwert des Bremsdrehmoments der Rutschkupplung überwunden wird, und sich die Antriebsrolle angedrückt an den Behälterboden zu drehen beginnt, so daß dieser in eine von der Drehrichtung des Antriebsmotors abhängige Richtung vorwärts bewegt wird.

Problematisch ist in der Praxis bei dieser bekannten Rollenantriebseinheit, daß die gesamte Getriebeanordnung vom Motor zur Antriebsrolle einerseits und zur Nockensteuerung andererseits sehr aufwendig gestaltet ist und viele Teile aufweist. Überdies ist eine Nockensteuerung erforderlich, so daß der Gesamtaufbau eine große Anzahl von mechanisch bewegten Teilen enthält. Dadurch ergeben sich nicht nur bei der Herstellung hohe Kosten, sondern auch ein im Flugzeugbau höchst unerwünschtes hohes Gewicht und eine große Bauform. Zudem führt die große Anzahl von zueinander bewegten Teilen zu einer unerwünschten Verschleißanfälligkeit und erfordert kurze Wartungsintervalle, um die im Flugzeugbau geforderte Zuverlässigkeit zu gewährleisten.

Als problematisch erweist sich in der Praxis auch die Tatsache, daß das die Nockensteuereinheit, die Antriebsrolle und das Motorgetriebe miteinander verbindende Planetengetriebe eine recht hohe innere Reibung aufweist. Dadurch ist es erforderlich, die Größe des maximalen Bremsmoments der Rutschkupplung sehr hoch zu wählen, damit die Nockensteuereinheit zuerst das Lagergestell vom Grundrahmen anhebt und die Rolle gegen den Behälterboden drückt, bevor das Antriebsdrehmoment des Motors die Antriebsrolle in Drehung versetzt. Durch dieses hohe Bremsmoment der Rutschkupplung, das zur Überwindung der inneren Lagerreibung des Planetengetriebes und zur Überwindung der von der Nockensteuereinheit benötigten Antriebskraft erforderlich ist, ergibt sich aber bereits vor dem Rotationsbeginn der Antriebsrolle eine sehr hohe Andruckkraft der Antriebsrolle am Behälterboden, so daß beim Einsatz der Drehung der Antriebsrolle schlagartig sehr hohe Tangentialkraftspitzen auftreten, die als Reaktionskraftspitzen auf die Bodenstruktur des Flugzeug-Frachtraums einwirken. Dies ist in der Praxis außerordentlich unerwünscht, da wegen der Leichtbauweise im Flugzeugbau bestimmte Grenzbelastungen der Bodenstruktur nicht überschritten werden dürfen, und insbesondere Stoßbelastungen äußerst unerwünscht sind. Überdies wird nach dem Stand der Technik als Rutschkupplung eine sogenannte Fluid-Reibungskupplung verwendet, deren Betriebsverhalten sehr temperaturabhängig ist. Angesichts der im Betrieb eines Flugzeugs auftretenden hohen Temperaturunterschiede ist es daher erforderlich, das maximale Drehmoment der Rutschkupplung so hoch zu wählen, daß auch bei den ungünstigsten Temperaturen der erforderliche Minimalwert nicht unterschritten wird.

Die der Erfindung zugrundeliegende Aufgabe besteht somit darin, eine Rollenantriebseinheit der eingangs genannten Gattung zu schaffen, die bei einfacherem Aufbau ein geringeres Gewicht und eine kleinere Bauform aufweist.

Gemäß der Erfindung wird diese Aufgabe dadurch gelöst, daß die Welle des ersten Getrieberades bezüglich der Basis ortsfest drehbar gelagert ist und daß der von der Führungseinrichtung erzwungene kreisbogenförmige Bewegungspfad der Antriebsrolle konzentrisch zur Drehachse der Welle des ersten Getrieberades angeordnet ist.

Bei dieser erfindungsgemäßen Ausgestaltung ist also vorgesehen, daß die Antriebsrolle unmittelbar an einer Führungseinrichtung gelagert ist, die der Antriebsrolle eine Schwenkbewegung entlang eines Kreisbogens gestattet, der konzentrisch zur Drehachse der Welle des ersten Getrieberades angeordnet ist, wobei die Welle des ersten Getrieberades ihrerseits ortsfest zur Basis, jedoch drehbar gelagert ist. Die Kupplungsvorrichtung überträgt beim Antrieb der Einheit durch den Motor zwischen der Getriebeanordnung und der Führungseinrichtung einen Teil des Antriebsdrehmoments derart, daß die Antriebsrolle aus ihrer unteren Ruhestellung entlang des Kreisbogens nach oben in ihre Arbeitsstellung geschwenkt wird, bis sie an der Unterseite des Bodens des darüber befindlichen Frachbehälters anstößt. Da dieses Drehmoment lediglich derart bemessen ist, daß das Massenträgheitsmoment der Antriebsrolle und der Führungseinrichtung überwunden werden kann, daß also die Antriebsrolle beim Antrieb durch den Motor nach oben schwenken kann, ist die auf den Boden des Frachtbehälters zu diesem Zeitpunkt ausgeübte Hebekraft sehr gering, nämlich entsprechend dem Überschuß des übertragenen Drehmoments über das Massenträgheitsmoment der Antriebsrolle. Auf dem Behälterboden wird also zu diesem Zeitpunkt nur eine sehr geringe Hebekraft ausgeübt. Die zu diesem Zeitpunkt bei Beendigung der Hebebewegung sich noch nicht drehende Rolle wird durch den Eingriff mit dem Behälterboden nun entgegen ihrer vorgesehenen Drehrichtung weiter abgebremst, so daß das auf die Führungseinrichtung einwirkende Drehmoment zu einer verstärkten Anhebung führt. Dadurch wird die Andruckkraft der Antriebsrolle am Behälterboden allmählich verstärkt und baut sich bis zu einem Grenzwert auf, der vom Gewicht des Frachtbehälters und dem Antriebsdrehmoment des Motors abhängig ist. Gleichzeitig wird durch die sich nunmehr in Drehung versetzte Antriebsrolle eine tangentiale Förderkraft auf den Frachtbehälter ausgeübt, so daß sich dieser in gewünschter Weise entsprechend der Drehrichtung des Motors in die gewünschte Richtung auf der Rollenbahn in Bewegung setzt.

Der Einsatz der Antriebskraft am Behälterboden erfolgt also beim Einschalten der Rollenantriebseinheit sehr sanft, und zwar ausgehend von einem geringen Wert beim anfänglichen Anpressen der Antriebsrolle am Behälterboden, so daß auch auf die Verankerungsstruktur der Rollenantriebseinheit, beispielsweise am Frachtraumboden eines Flugzeuges, nur sehr geringe Reaktions-Stoßkräfte auftreten, die ohne weiteres unter dem zulässigen Wert gehalten werden können.

Diese erfindungsgemäße Funktion beruht darauf, daß wegen der besonderen Ausgestaltung der Führungseinrichtung und der mit der Kupplungsvorrichtung versehenen Steuereinrichtung weder eine besondere Nockensteuereinheit noch ein Planetengetriebe erforderlich sind, so daß deren Reibungskräfte bzw. Betätigungskräfte wegfallen und dadurch das von der Kupplungsvorrichtung zu übertragende Drehmoment klein gehalten werden kann. Durch den Wegfall der Nockensteuereinrichtung und des Planetengetriebes ergibt sich eine ganz wesentliche Verkleinerung der Bauform der Rollenantriebseinheit und ihres Gewichtes, sowie eine Verminderung der Anzahl der benötigten bewegten Teile, so daß Kosteneinsparungen bei der Herstellung und durch den verminderten Verschleiß der wenigen zueinander bewegten Teile auch bei der Wartung erzielen lassen. Aus der Tatsache, daß das an der Führungseinrichtung angreifende Drehmoment der Kupplungseinrichtung gegenüber dem beim Stand der Technik erforderlichen Bremsdrehmoments sehr klein gehalten werden kann, ergibt sich ferner der Vorteil, daß anstelle der nach dem Stand der Technik üblichen, beispielsweise als Fluid-Reibungskupplung ausgebildeten Rutschkupplung, mechanische oder elektromagnetische Kupplungsvorrichtungen verwendet werden können, deren Temperaturabhängigkeit in der Praxis sehr gering ist. Dadurch kann das vorbestimmte Drehmoment der Kupplungsvorrichtung ohne des wegen der Temperatureinflüsse beim Stand der Technik erforderlichen Überschusses auf den vorgegebenen Minimalwert eingestellt werden.

Als weiterer Vorteil der erfindungsgemäßen Ausgestaltung ist hervorzuheben, daß die Rollenantriebseinheit beim Ausfall eines ihrer Antriebselemente während des Betriebs, beispielsweise des Motors, selbsrückstellende Eigenschaften aufweist, da beim Ausfall der Antriebskraft die Antriebsrolle von selbst vom Boden des Frachtbehälters weg nach unten in ihre Ruhestellung schwenkt, so daß zwischen dem Behälter und der Antriebsrolle im Störungsfall kein Verschleiß durch Abrieb entstehen kann.

Gemäß einer möglichen Ausführungsform der erfindungsgemäßen Rollenantriebseinheit ist vorgesehen, daß als Führungseinrichtung wenigstens an einer Axialseite der Antriebsrolle ein Führungshebel vorgesehen ist, dessen eines Ende konzentrisch zur Drehachse des ersten Getrieberades ortsfest zur Basis schwenkbar gelagert ist, und in dessen freiem Ende die Antriebswelle der Antriebsrolle drehbar gelagert ist. Wenn nur ein Führungshebel an einer Seite angeordnet ist, ergibt sich eine besonders einfache und leichte, mit geringer Baugröße herstellbare Ausführung, da die Antriebsrolle dabei freikragend an dem einen Führungshebel gelagert ist.

Zwar ist es möglich, die Lagerung des Führungshebels und der das erste Getrieberad tragenden Welle im axialen Abstand koaxial zueinander getrennt vorzunehmen, jedoch ist es bevorzugt, daß das erste Getrieberad drehfest auf einer parallel im Abstand zur Antriebswelle der Antriebsrolle angeordneten Zwischenwelle angebracht ist, und daß das eine Ende des Führungshebels schwenkbar um diese Zwischenwelle gelagert ist.

Falls eine hohe Belastbarkeit der Rollenantriebseinheit erforderlich ist, sieht man vor, daß an beiden Axialseiten der Antriebsrolle jeweils ein Führungshebel vorgesehen ist. Durch die zweiseitige Lagerung der Antriebsrolle werden dabei keine Biegemomente auf die Welle der Antriebsrolle ausgeübt.

Besonders bevorzugt ist es, daß wenigstens einer der Führungshebel als länglicher Hohlkörper ausgebildet ist, in welchem jeweils das erste Getrieberad und das an der Antriebswelle der Antriebsrolle angebrachte zweite Getrieberad aufgenommen sind. Auf diese Weise sind die beiden miteinander kämmenden Getrieberäder vor Verschmutzung geschützt und zudem raumsparend untergebracht.

Gemäß einer bevorzugten Ausführungsform ist es vorgesehen, daß in wenigstens einem der Führungshebel eine das Drehmoment zwischen der Getriebeanordnung und der Führungseinrichtung übertragende Kupplungsvorrichtung aufgenommen ist. Hierdurch wird die Kupplungsvorrichtung gegen mechanische Beschädigung und Verschmutzung geschützt und es ergibt sich ein raumsparender Aufbau.

Eine mechanisch einfache Gestaltung mit wenigen bewegbaren Teilen zeichnet sich dadurch aus, daß nur an einer Axialseite der Antriebsrolle eine das Antriebsdrehmoment vom Motor auf die Antriebsrolle übertragende Getriebeanordnung vorgesehen ist, und daß die beiden Führungshebel mittels eines die Antriebsrolle überbrückenden Verbindungsbügels starr gekoppelt sind.

Falls allerdings eine hohe mechanische Belastbarkeit der Einheit gefordert ist, sieht man vor, daß an beiden Axialseiten der Antriebsrolle eine das Antriebsdrehmoment vom Motor auf die Antriebsrolle übertragende Getriebeanordnung vorgesehen ist. Dabei sind die beiden Führungshebel jeweils als Hohlkörper ausgebildet, in denen jeweils das erste und das zweite Getrieberad und gegebenenfalls eine Kupplungsvorrichtung untergebracht sind.

Damit bei einer derartigen Ausführungsform mit zwei parallelen Getriebeanordnungen mögliche, durch Herstellungstoleranzen bedingte Unterschiede der beiden Getriebeanordnungen ausgeglichen werden können, daß sich also die beiden Führungshebel im Betrieb synchron bewegen, ist gemäß einer bevorzugten Ausführungsform vorgesehen, daß die Getriebeanordnung an der einen Seite vom Motor über ein Differentialgetriebe angetrieben ist, dessen Eingang mit dem Rotor des Motors und dessen erster Ausgang mit der Getriebeanordnung gekoppelt sind, während der zweite Ausgang des Differentialgetriebes mit einer Stellvorrichtung zum Ausgleich von Asymmetrien der beiden Getriebeanordnungen verbunden ist. Diese Stellvorrichtung kann einfach als manuell einstellbare Schraubspindel ausgebildet sein, die auf den zweiten Ausgang derart einwirkt, daß Asymmetrien der Wirkungslängen der beiden Getriebeanordnungen kompensiert werden.

Bevorzugt ist es, daß das erste und zweite Getrieberad Zahnräder sind. Damit eine zur Zwischenwelle gegensinnige Drehung der Antriebsrolle erreicht wird, sieht man vor, daß das erste Getrieberad über n Paare von Freilaufzahnrädern mit dem zweiten Getrieberad gekoppelt ist, wobei n = 0, 1, 2.. gilt. Die Freilaufzahnräder können zwischen die ersten und zweiten Zahnräder eingefügt werden, um einen größeren Zwischenraum zu überbrücken und die erforderlichen Durchmesser der einzelnen Getrieberäder gering zu halten, damit sich eine kleine Bauform einhalten läßt.

Sofern die tragende Struktur nicht eine unmittelbare Lagerung und Anbringung der Teile der Rollenantriebseinheit zuläßt, ist es bevorzugt, daß als Basis ein Rahmen mit zwei im Abstand zueinander aufrechtstehenden Lagerplatten vorgesehen ist, und daß in wenigstens einer dieser Lagerplatten eine vom Motor angetriebene, das erste Getrieberad drehfest tragende Zwischenwelle drehbar gelagert ist.

Zur Aufnahme des Reaktionsdrehmoment kann vorgesehen sein, daß das Gehäuse des Motors bewegungsfest an der Basis befestigt ist.

Vorteilhaft ist es, wenn die Zwischenwelle in zwei getrennte, jeweils in den Lagerplatten gelagerte Zwischenwellenstummel unterteilt ist, und daß wenigstens einer dieser Zwischenwellenstummel vom Motor angetrieben ist. Bei dieser Ausführungsform läßt sich eine geringe Baugröße erzielen, da hierbei die Antriebsrolle zwischen die inneren Enden der Zwischenwellenstummel angeordnet werden kann.

Bevorzugt ist es, daß die Kupplungsvorrichtung zur Übertragung eines von der Relativdrehgeschwindigkeit der gekoppelten Elemente unabhängigen Drehmoments ausgebildet ist.

Bei bestimmten Anwendungsfällen kann die Kupplungsvorrichtung auch als Fluid-Reibungskupplung oder als elektromagnetische Kupplung ausgebildet sein. .

Bevorzugt ist die Kupplungsvorrichtung als Rollenreibungskupplung ausgebildet, deren grundsätzlicher Aufbau und Funktionsweise dem Fachmann bekannt sind.

Gemäß einer Ausführungsform der Erfindung ist die Kupplungsvorrichtung zur Übertragung des Drehmoments zwischen dem ersten Getrieberad und dem zugeordneten Ende des Führungshebels angeordnet. Bei bestimmten Anwendungen kann es auch vorteilhaft sein, daß die Kupplungsvorrichtung zur Übertragung des Drehmoments zwischen dem zweiten Getrieberad und dem zugeordneten Ende des Führungshebels angeordnet ist. In jedem Fall überträgt die Kupplungsvorrichtung einen Teil des vom Motor gelieferten Antriebsdrehmoments derart auf die Führungseinrichtung, daß die Antriebsrolle beim Einschalten des Motors aus der Ruhestellung in die Arbeitsstellung angehoben wird.

Gemäß einer speziellen Ausgestaltung ist vorgesehen, daß als Kupplungsvorrichtung innerhalb des als Hohlkörper ausgebildeten Führungshebels zwei die Welle des ersten Getrieberads umgebende und beiderseits des mit der Welle verbundenen ersten Getrieberads angeordnete Lagerscheiben vorgesehen sind, daß zwischen jeder Lagerscheibe und der jeweils gegenüberliegenden Seitenfläche des ersten Getrieberads eine Vielzahl von umfangsmäßig verteilten, jeweils im Winkel schräg zur Radialrichtung angeordneten Bremsrollen angeordnet ist, daß eine der Lagerscheiben an der Innenwand des Führungshebels abgestützt ist, und daß die anderen Lagerscheiben mittels einer an der gegenüberliegenden Innenwand abgestützten Federeinrichtung gegen die Bremsrollen gedrückt ist. Bevorzugt ist es dabei, daß die beiden Lagerscheiben drehfest gehalten sind.

Bei einer alternativen Ausführungsform ist vorgesehen, daß als Kupplungsvorrichtung innerhalb des als Hohlkörper ausgebildeten Führungshebels zwei die Antriebswelle der Antriebsrolle umgebende und beiderseits des mit der Antriebswelle verbundenen zweiten Getrieberades angeordnete Lagerscheiben vorgesehen sind, daß zwischen jeder Lagerscheibe und der jeweils gegenüberliegenden Seitenfläche des zweiten Getrieberades eine Vielzahl von umfangsmäßig verteilten, jeweils im Winkel schräg zur Radialrichtung angeordneten Bremsrollen angeordnet ist, daß eine der Lagerscheiben an der Innenwand des Führungshebels abgestützt ist, und daß die andere Lagerscheibe mit einer an der gegenüberliegenden Innenwand abgestützten Federeinrichtung gegen die Bremsrollen gedrückt ist. Auch hierbei sind die beiden Lagerscheiben drehfest angebracht und die Federeinrichtung ist vorzugsweise als Tellerfeder ausgebildet.

Eine bevorzugte weitere Ausführungsform der erfindungsgemäßen Rollenantriebseinheit zeichnet sich dadurch aus, daß der oder die Führungshebel als zweiarmige Hebel ausgebildet sind, die jeweils etwa in ihrer Mitte konzentrisch zur Drehachse des ersten Getrieberades schwenkbar gelagert sind, daß in den beiden freien Enden der zweiarmigen Hebel jeweils drehbar eine Antriebsrolle gelagert ist, an deren Antriebswelle jeweils ein zweites Getrieberad drehfest angebracht ist, und daß die beiden Antriebsrollen von dem ersten Getrieberad gegensinnig angetrieben sind. Bei dieser Ausführungsform sind also zwei Antriebsrollen vorgesehen, von denen die eine zum Antreiben der Gegenstände in die eine Richtung nach oben in ihre Arbeitsstellung geschwenkt wird, während die andere Antriebsrolle zum Antrieb der Gegenstände in der entgegengesetzten Richtung vorgesehen ist. Die beiden Antriebsrollen treiben also den Gegenstand jeweils nur in einer Richtung an, so daß sie im Betrieb keiner Wechselbelastung unterworfen sind und daher der Verschleiß der Antriebsrollen außerordentlich gering ist. Dadurch ist es möglich, im Vergleich zu einer Ausführungsform mit nur einer in beiden Richtungen arbeitenden Antriebsrolle die beiden Antriebsrollen gemäß dieser Ausführungsform mit der halben Rollenlänge vorzusehen, so daß eine erhebliche Verminderung der Baugröße in axialer Richtung der Antriebsrollen ermöglicht wird. Überdies wird bei dieser Ausführungsform in ganz besonders vorteilhafter Weise vermieden, daß die Antriebsrolle zur Umkehr der Antriebsrichtung auf ihrem kreisförmigen Bewegungspfad nach unten in die andere Arbeitsstellung hindurch schwenken muß, wie es bei der Ausführung mit einer einzigen Antriebsrolle erforderlich ist. Es läßt sich daher eine ganz besonders geringe Bauhöhe der Antriebsrolleneinheit erreichen.

Bevorzugt ist es, daß die beiden Antriebsrollen parallel im Abstand zueinander angeordnet sind, wobei an den beiden Axialseiten der beiden Antriebsrollen jeweils ein zweiarmiger Hebel vorgesehen ist. Bei einer besonders vorteilhaften Ausführungsform mit wenigen bewegten Teilen ist vorgesehen, daß nur an einer Axialseite der beiden Antriebsrollen an dem zweiarmigen Hebel das erste und zweite Getrieberad vorgesehen sind. In diesem Fall ist es zweckmäßig, wenn die beiden zweiarmigen Hebel über ein Verbindungselement starr gekoppelt sind. Dieses Verbindungselement kann entweder ein Verbindungsbügel sein oder aber bei einer speziellen Ausführungsform das Gehäuse des Antriebsmotors.

Die zur Herbeiführung der Schwenkbewegung der Führungshebel vorgesehene Kupplungsvorrichtung ist dabei zur Übertragung des Drehmoments zwischen dem ersten Getrieberad bzw. der damit verbundenen Zwischenwelle und dem benachbarten mittleren Bereich des zweiarmigen Hebels angeordnet. Auch hierbei kann der zweiarmige Hebel wenigstens teilweise als Hohlkörper ausgebildet sein, in dem neben den Getrieberädern auch die Kupplungsvorrichtung eingeschlossen ist.

Zur Begrenzung der Baugröße ist bevorzugt vorgesehen, daß der Motor zwischen den beiden Antriebsrollen und den zweiarmigen Hebeln angeordnet ist und an seinen beiden Axialseiten herausragende, mit seiner Rotorwelle gekoppelte Antriebswellen aufweist, auf denen als Zwischenwellen die zweiarmigen Hebel schwenkbar gelagert sind, und von denen wenigstens eine ein erstes Getrieberad drehfest trägt.

Zur Entlastung der Zwischenwellen bzw. der Antriebswellen des Motors kann vorgesehen sein, daß die Zwischenwellen drehbar in Lagerplatten der Basis abgestützt sind.

Gemäß einer besonderen Ausführungsform ist das Gehäuse des Motors an der Basis festgelegt, so daß das Reaktionsdrehmoment abgeleitet werden kann.

Bei einer weiteren bevorzugten Ausführungsform ist vorgesehen, daß der Motor ein Getriebe umfaßt, das wenigstens eine das erste Getrieberad tragende Zwischenwelle gegensinnig zur Drehung der Rotorwelle des Motors antreibt, und daß das Gehäuse des Motors bezüglich der Basis zumindest in einem begrenzten Drehwinkelbereich drehbar, jedoch drehfest mit dem zweiarmigen Hebel verbunden ist. Bei dieser Ausführungsform ist als Kupplungsvorrichtung zur Übertragung des begrenzten Drehmoments das erste Getrieberad über die zugeordnete Zwischenwelle, das Getriebe, den Rotor und das mit dem Stator des Motors verbundene Gehäuse elektromagnetisch mit dem zweiarmigen Hebel gekoppelt.

Bei dieser Ausgestaltung wird beim Einschalten des Motors zunächst der Rotor des Motors durch die Massenträgheit des Getriebes, der Getriebeverbindung zur Antriebsrolle und der Antriebsrolle selbst, sowie der Getriebereibung derart abgebremst, daß sich statt des Rotors nunmehr der Stator des Motors in entgegengesetzter Drehrichtung zu drehen beginnt. Da der Stator und das Gehäuse des Motors starr mit dem zweiarmigen Hebel verbunden sind, wird sich der zweiarmige Hebel in der gewünschten Richtung schwenken und die eine Antriebsrolle in ihre Arbeitsstellung bringen. Nachdem die Antriebsrolle an der Unterseite des zu bewegenden Gegenstandes angestoßen ist, wird diese Schwenkbewegung beendet und es beginnt sich nunmehr der Rotor des Motors und die von ihm angetriebene Antriebsrolle zu drehen. Bei dieser Ausgestaltung erfolgt also die Übertragung des Drehmoments auf die Führungshebel durch elektromagnetische Kupplung zwischen dem Rotor und dem Stator des Motors.

Zusätzlich kann bei dieser Ausführung noch vorgesehen sein, daß die von der Rotorwelle angetriebene Zwischenwelle über eine Bremseinrichtung mit dem Führungshebel gekoppelt ist, so daß beim Einschalten des Motors dem Rotor ein höheres Bremsdrehmoment entgegengesetzt wird und dadurch die Schwenkbewegung des Führungshebels sicher gewährleistet wird.

Um das Absenkungsverhalten der Antriebsrolle oder der Antriebsrollen aus der Arbeitsstellung in die Ruhestellung beim Abschalten des Motors unter allen Umständen sicher zu gewährleisten, kann bei all den vorstehend beschriebenen Ausführungsformen vorgesehen sein, daß die Führungshebel mittels einer Federeinrichtung in die Ruhestellung der Antriebsrolle vorgespannt sind.

Bevorzugt besteht die Federeinrichtung aus einer, die das erste Getrieberad tragende Zwischenwelle umschließende Schraubenfeder, deren freie Enden einerseits an der Lagerplatte der Basis bzw. andererseits an dem zugeordneten Führungshebel angreifen.

Um eine sichere Funktion zu gewährleisten ist dabei vorgesehen, daß das von der Federeinrichtung ausgeübte Drehmoment kleiner ist als das von der Kupplungsvorrichtung übertragene Drehmoment, jedoch größer als das zum Rückdrehen der Getriebeanordnung und des Motors aus der Arbeits- in die Ruhestellung benötigte Moment. Beim Einschalten des Motors ist daher das Kupplungsdrehmoment größer als das von der Federeinrichtung ausgeübte entgegengesetzte Drehmoment, so daß sich die Antriebsrolle aus der Ruhestellung in die Arbeitsstellung bewegen kann. Beim Abschalten des Motors in der Antriebsstellung kann nun zwar die Federeinrichtung das Kupplungsmoment der Kupplungsvorrichtung nicht überwinden, jedoch ist die Federeinrichtung stark genug, um die Getriebeanordnung und den damit verbundenen Motor in entgegengesetzter Richtung zurückzudrehen, so daß sich der Führungshebel mitsamt der Antriebsrolle aus der Arbeitsstellung in die Ruhestellung absenken kann.

Gemäß einer alternativen Ausführungsform der erfindungsgemäßen Rollenantriebseinheit ist vorgesehen, daß die Basis zwei aufrechte, im Abstand etwa parallel zueinander gehaltene Führungsplatten aufweist, zwischen denen die Antriebsrolle quer angeordnet ist, und daß als Führungseinrichtung an den einander zugewandten Seitenflächen der Lagerplatten entsprechend dem Bewegungspfad der Antriebsrolle kreisbogenförmige, zur Zwischenwelle konzentrische Führungsnuten geformt sind, in denen die Enden der Antriebswelle der Antriebsrolle frei verschiebbar, jedoch gegen Rotation mit dem vorbestimmten Drehmoment der Kupplungsvorrichtung gebremst sind. Diese Ausführungsform zeichnet sich durch eine ganz besonders einfache Bauweise mit wenig bewegten Teilen aus, so daß sich auch eine geringe Baugröße und hohe Zuverlässigkeit erzielen lassen. Die bei den übrigen Ausführungsformen vorgesehenen Führungshebel sind dabei durch kreisbogenförmige Führungsnuten in den Lagerplatten ersetzt. Die Funktionsweise ist dabei die gleiche wie bei den übrigen Ausführungsformen.

Besonders einfach ist ein Aufbau, bei dem die Kupplungsvorrichtung durch die Reibungsflächen der Antriebswelle der Antriebsrolle gebildet ist.

Eine höhere Zuverlässigkeit läßt sich bei dieser Ausführung jedoch erzielen, wenn die Kupplungsvorrichtung, beispielsweise als Rollenreibungskupplung ausgebildet, zwischen dem auf der Antriebswelle der Antriebsrolle angebrachten zweiten Getrieberad und den den Führungsnuten benachbarten Flächen der Lagerplatte angeordnet ist und zwischen diesen Teilen das begrenzte Drehmoment überträgt. In diesem Fall ist somit eine besondere Kupplungsvorrichtung vorgesehen, die unabhängig von der an sich unerwünschten Lagerreibung der Welle der Antriebsrolle ist.

Da im Betrieb die Antriebsrolle einem gewissen Verschleiß durch die Reibung am Frachtbehälterboden ausgesetzt ist, ist in der Praxis eine Ausgestaltung bevorzugt, bei der die Antriebsrolle einen zylindrischen starren Körper und einen die Umfangsfläche einhüllenden Mantel aus elastischem, reibungsbehaftetem Material wie Polyurethan oder Nitrilkautschuk umfaßt. Durch diese Ausgestaltung wird einerseits der Abrieb der Oberfläche der Antriebsrolle vermindert und andererseits auch ein guter Reibungskontakt mit dem Behälterboden erzielt.

Vorzugsweise ist bei allen beschriebenen Ausführungsformen der erfindungsgemäßen Rollenantriebseinheit vorgesehen, daß die Antriebswelle der Antriebsrolle in zwei getrennte, in einer zentralen Durchgängsbohrung der Antriebsrolle drehfest, jedoch axial verschiebbar gelagerte Wellenstummel unterteilt ist, deren im Abstand zueinander angeordnete innere Enden gegeneinander nach außen federvorgespannt sind. Die zweiten Getrieberäder sind dabei jeweils drehfest, jedoch axial verschiebbar auf den Wellenstummeln angebracht. Durch diesen Aufbau läßt sich die Antriebsrolle ohne Zerlegung der Rollenantriebseinheit bei Verschleiß oder Beschädigung dadurch auswechseln, daß die beiden Wellenstummel nach innen entgegen der Federvorspannung so weit zusammengedrückt werden; daß sie aus ihren Lagerstellen heraustreten und dadurch die Antriebsrolle aus der Rollenantriebseinheit herausgenommen werden kann.

Die Erfindung wird im folgenden beispielsweise unter Bezugnahme auf die Zeichnung näher erläutert; es zeigt:

Fig. 1 eine perspektivische Darstellung einer schematisierten Ausführungsform einer erfindungsgemäßen Rollenantriebseinheit;

Fig. 2 eine Draufsicht auf die Rollenantriebseinheit der Fig. 1;

Fig. 3 eine vertikale Schnittansicht gemäß der Schnittlinie A-A der Fig. 2, wobei ein Teil des Führungshebels der Führungseinrichtung ausgebrochen und die Antriebsrolle in ihrer Ruhestellung gezeigt ist;

Fig. 4 eine vertikale Teilschnittansicht insbesondere der Führungseinrichtung und der Antriebsrolle gemß der Schnittlinie B-B der Fig. 2;

Fig. 5 eine teilweise ausgebrochene Seitenansicht der Rollenantriebseinheit, wobei die Antriebsrolle in der einen angehobenen Antriebsstellung gezeigt ist;

Fig. 6 eine der Fig. 5 entsprechende Seitenansicht, wobei die Antriebsrolle in ihrer entgegengesetzten Antriebsstellung dargestellt ist;

Fig. 7 eine im wesentlichen der Fig. 4 entsprechende vertikale Teilschnittansicht einer Ausführungsform, bei der die Kupplungsvorrichtung zwischen dem ersten Getrieberad und dem Führungshebel angeordnet ist;

Fig. 8 eine perspektivische Darstellung einer Ausführungsform der erfindungsgemäßen Rollenantriebseinheit, bei der nur an einer Seite eine Getriebeverbindung vom Motor zur Antriebsrolle vorgesehen ist und die beiden Führungshebel starr miteinander verbunden sind;

Fig. 9 eine der Fig. 4 vergleichbare vertikale Teilschnittansicht insbesondere der Führungseinrichtung einer weiteren Ausführungsform, bei der eine die Antriebsrolle in die Ruhestellung vorspannende Federeinrichtung vorgesehen ist; '

Fig. 10A, B, C Teilschnittansichten entlang der Schnittlinie C-C der Fig. 9, wobei die Antriebsrolle in ihrer Ruhestellung bzw. in ihren beiden möglichen Arbeitsstellungen gezeigt ist;

Fig. 11 eine vertikale Teilschnittansicht der Führungseinrichtung einer weiteren Ausführungsform, wobei die Führungseinrichtung als kreisbogenförmige Führungsrille in einer Lagerplatte ausgebildet ist;

Fig. 12A, B, C jeweils Teilschnittansichten entlang der Linie D-D der Fig. 11, wobei die Antriebsrolle in ihrer Ruhestellung bzw. in ihren beiden Antriebsstellungen gezeigt ist;

Fig. 13 eine Ausführungsform gemäß der Erfindung mit zweiarmigen Führungshebeln und zwei Antriebsrollen in teilweise geschnittener Draufsicht;

Fig. 14A, B, C Seitenansichten der Rollenantriebseinheit gemäß Fig. 13 in Richtung des Pfeiles E, wobei die vorne liegende Lagerplatte und der Lagerzapfen weggelassen sind und die Einheit in der Ruhestellung und den beiden Antriebsstellungen dargestellt ist;

Fig. 15 eine Seitenansicht einer weiteren Ausführungsform mit doppelarmigen Führungshebeln und zwei Antriebsrollen;

Fig. 16 eine Draufsicht der Ausführungsform der Fig. 15; und

Fig. 17 eine Teildraufsicht gemäß der Fig. 16, wobei zur Darstellung der Kupplungsvorrichtung der Führungshebel teilweise aufgeschnitten ist.

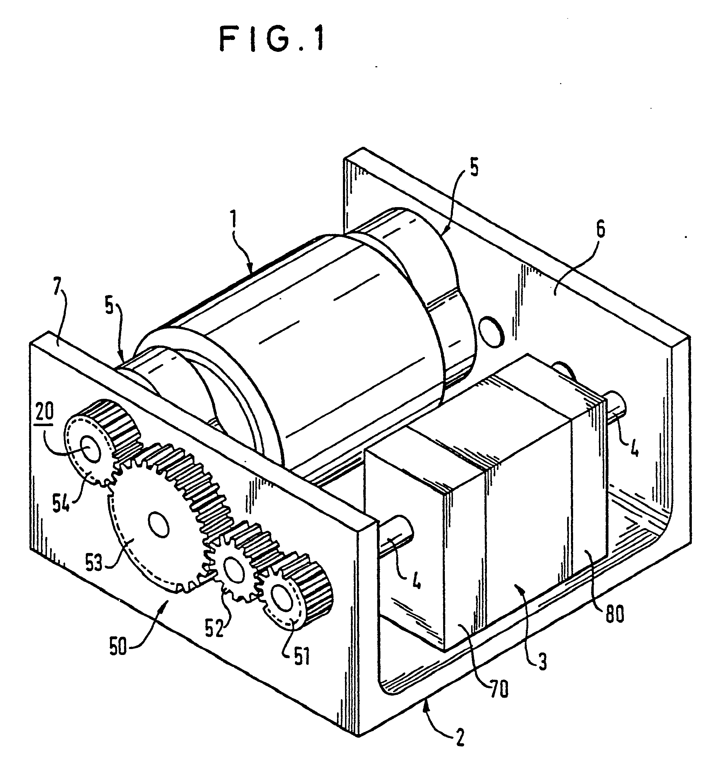

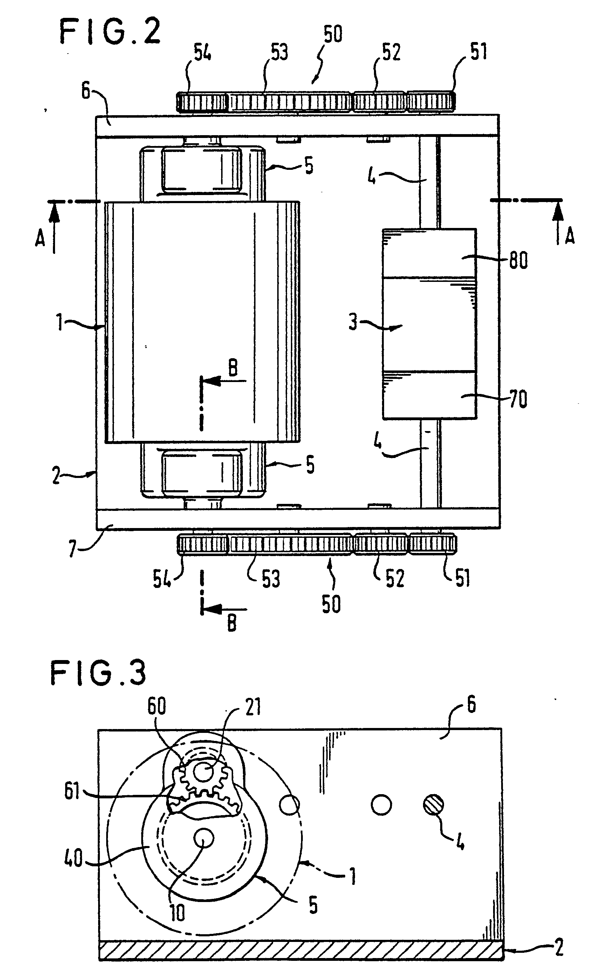

Die in den Fig. 1 und 2 gezeigte Ausführungsform der Rollenantriebseinheit weist eine Basis 2 auf, die mit zwei im Abstand parallel zueinander aufrechtstehenden Lagerplatten 6 und 7 versehen ist. Zwischen diesen Lagerplatten 6, 7 ist an einem Ende der Basis 2 ein Motor 3 angebracht, der eine beiderseits herausragende Antriebswelle 4 aufweist, die in den beiden Lagerplatten 6 und 7 gelagert ist und an ihren außerhalb der Lagerplatten 6, 7 wegragenden Enden jeweils ein mit ihr fest verbundenes Zahnrad 51 trägt. Diese Antriebswelle 4 ist an jeder Außenseite der beiden Lagerplatten 6, 7 über eine Getriebeverbindung 50 mit einer in der Nähe des anderen Endes der Basis 2 in den Lagerplatten 6, 7 gelagerten Zwischenwelle 20 verbunden. Jede dieser Getriebeverbindungen besteht aus dem mit der Antriebswelle 4 des Motors verbundenen Zahnrad 51, den beiden freilaufenden, auf Lagerzapfen an den Lagerplatten 6, 7 gelagerten Freilaufzahnrädern 52 und 53 und einem fest mit der Zwischenwelle 20 verbundenen Zahnrad 54, wobei alle diese Zahnräder jeder Getriebeverbindung 50 kämmend miteinander im Eingriff stehen. Durch diese Getriebeverbindungen 50 wird der Abstand zwischen der Antriebswelle 4 des Motors und der Zwischenwelle 20 überbrückt und gegebenenfalls ein erwünschtes Übersetzungsverhältnis gewährleistet.

Die Zwischenwelle 20 ist an der Innenseite der beiden Lagerplatten 6, 7 über jeweils eine Steuereinrichtung 5 mit der sich quer zwischen den beiden Lagerplatten 6, 7 erstreckenden Antriebsrolle 1 gekoppelt.

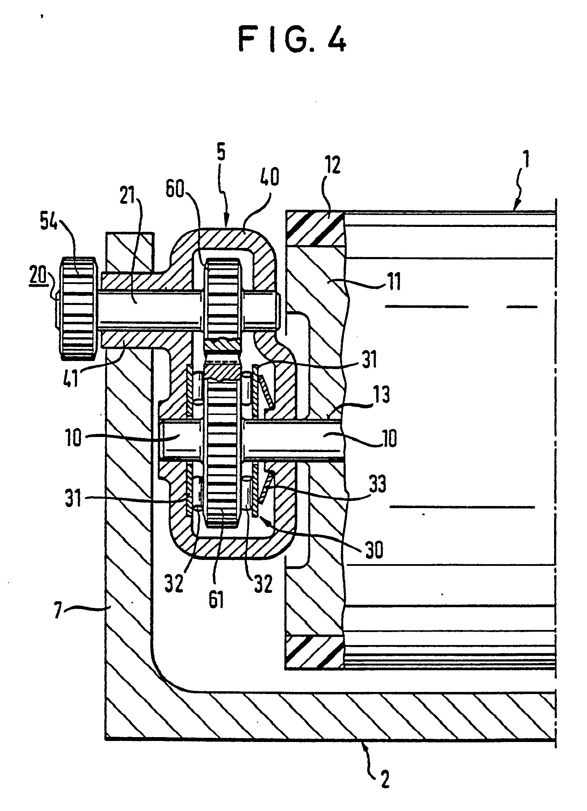

Wie in den Fig. 3 und 4 gezeigt ist, umfaßt jede Steuereinrichtung 5 als Führungseinrichtung einen Führungshebel 40, eine Kupplungsvorrichtung 30 und als Zahnräder ausgebildete erste und zweite Getrieberäder 60 und 61. Wie in der Fig. 4 im Schnitt dargestellt ist, ist die Zwischenwelle 20 unterteilt und umfaßt zwei Zwischenwellenstummel 21, von denen jeder an einer der Lagerplatten 6, 7 angeordnet ist. Jeder Führungshebel 40 ist als länglicher Hohlkörper geformt und weist an einem Ende eine nach außen vorspringende Lagerbuchse 41 auf, die in einer Bohrung in der zugeordneten Lagerplatte 6 bzw. 7 drehbar gelagert ist. Jeder Zwischenwellenstummel 21 ist in der zugeordneten Lagerbuchse 41 und in einer Bohrung der gegenüberliegenden Wand des als Hohlkörper ausgebildeten Führungshebels 40 drehbar gelagert und trägt im Inneren des Führungshebels 40 drehfest das erste Getrieberad 60. Am anderen, freien Ende jedes Führungshebels 40 ist in entsprechenden Lagerbohrungen das zugeordnete Ende der Antriebswelle 10 der Antriebsrolle 1 gelagert. Innerhalb des Führungshebels 40 ist an den Enden der Antriebswelle 10 jeweils das zweite Getrieberad 61 drehfest angebracht, das mit dem ersten Getrieberad 60 des Zwischenwellenstummels 21 kämmt und sich an diesem bei einer Schwenkbewegung der Antriebswelle 10 abwälzt. Wie in den Fig. 1 und 2 schematisch gezeigt, umfaßt der Motor 3 zwei Getriebeeinheiten 70 und 80, nämlich ein an einer Axialseite des Motors 3 angeordnetes Untersetzungsgetriebe 70 und ein an der anderen Axialseite vorgesehenes Differentialgetriebe 80. Der Eingang dieses Differentialgetriebes 80 ist von dem Rotor des Motors 3 angetrieben, während sein erster Ausgang unmittelbar über die entsprechende Antriebswelle 4 mit der zugeordneten Getriebeverbindung 50 gekoppelt ist. Der zweite Ausgang des Differentialgetriebes, das beispielsweise als Planetengetriebe ausgebildet ist, ist mit einer (nicht gezeigten) Stellvorrichtung verbunden, die beispielsweise aus einer manuell einstellbaren Schraubspindel besteht und es ermöglicht, mechanische Unterschiede der beiden an den jeweiligen Lagerplatten angeordneten Getriebeverbindungen durch entsprechende Einstellung auszugleichen. Dadurch wird erreicht, daß die beiden Führungshebel 40 im Betrieb stets synchron zueinander aus der Ruhestellung in die Arbeitsstellung und umgekehrt schwenken.

Im Inneren jedes der als Hohlkörper ausgebildeten Führungshebel 40 ist ferner die zwischen dem Führungshebel 40 und der Antriebswelle 10 der Antriebsrolle 1 ein entgegen der Drehrichtung der Antriebswelle 10 wirkendes Bremsdrehmoment erzeugende Kupplungsvorrichtung 30 angeordnet, wobei diese Kupplungsvorrichtung 30 als Rollenreibungskupplung ausgebildet ist. Der Aufbau einer derartigen Rollenreibungskupplung ist dem Fachmann ebenso bekannt wie die Funktionsweise. Bei der dargestellten Ausführung umfaßt die Kupplungsvorrichtung 30 zwei beiderseits des zweiten Getrieberads 61 die Antriebswelle 10 umgebende, etwa ringförmige Lagerscheiben 31, von denen die eine an der der zugeordneten Lagerplatte 7 bzw. 6 nächstgelegenen Innenwand des Führungshebels 40 drehfest angebracht ist, während die andere Lagerscheibe an der gegenüberliegenden Innenwand des Führungshebels 40 mittels einer als Tellerfeder ausgebildeten Federeinrichtung 33 abgestützt ist. Zwischen jeder Lagerscheibe 31 und der jeweils gegenüberliegenden Seitenfläche des zweiten Getrieberades 61 ist eine Vielzahl von umfangsmäßig verteilten und im Winkel schräg zur Radialrichtung des zweiten Getrieberades 61 angeordneten Bremsrollen 32 vorgesehen. Diese Bremsrollen können beispielsweise durch einen (in der Zeichnung nicht dargestellten) Lagerkäfig gehalten sein. Durch die als Tellerfeder ausgebildete Federeinrichtung 33 werden die beiden Lagerscheiben mit den Bremsrollen 32 unter Vorspannung gegen die Seitenflächen des zweiten Getrieberades 61 gehalten. Durch diese Ausgestaltung wird von der Kupplungsvorrichtung 30 auf das zweite Getrieberad 61 und damit auf die Antriebswelle 10 ein Bremsdrehmoment ausgeübt, das der jeweiligen Drehrichtung der Antriebswelle 10 entgegenwirkt und im wesentlichen von der Drehgeschwindigkeit der Antriebswelle 10 unabhängig ist.

Wie in der Fig. 4 angedeutet, umfaßt die Antriebsrolle 1 einen starren, etwa zylindrischen Körper 11, der als innen verrippter Hohlkörper, beispielsweise aus Leichtmetall, ausgebildet sein kann. Der Außenumfang des Körpers 11 ist mit einem Mantel 12 aus elastischem, stark reibungsbehafteten und abriebsfesten Material, wie Nitrilkautschuk oder Polyurethan versehen. In einer Durchgangsbohrung 13 des Körpers 11 ist drehfest die Antriebswelle 10 aufgenommen. Diese Antriebswelle 10 ist gemäß einer in der Zeichnung nicht dargestellten Ausführungsform in zwei getrennte Wellenstummel unterteilt, die jeweils an einem Ende des Körpers 11 drehfest, jedoch axial verschiebbar gelagert sind. Die im Abstand zueinander angeordneten inneren Enden der beiden Wellenstummel sind Mittels einer in der Durchgangsbohrung 13 des Körpers 11 aufgenommenen Federeinrichtung gegeneinander nach außen vorgespannt. Auf den aus dem Körper 11 jeweils in Axialrichtung herausragenden freien Enden der Wellenstummel der Antriebswelle 11 ist jeweils das zweite Getrieberad 61 drehfest, jedoch axial verschiebbar angebracht. Diese Ausführungsform ermöglicht es, die beiden Wellenstummel mit geeigneten Werkzeugen in das Innere des Körpers 11 entgegen der Federvorspannung völlig hineinzudrücken, so daß die Antriebsrolle im zusammengebauten Zustand der Rollenantriebseinheit leicht ausgewechselt werden kann, ohne die gesamte Anordnung auseinandernehmen zu müssen.

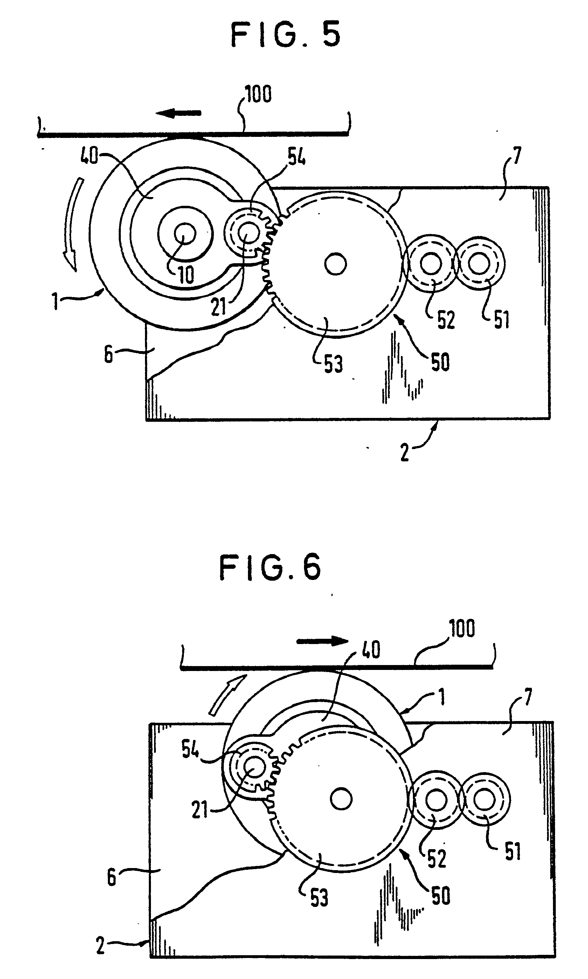

Im folgenden wird nun mit Bezug auf die Fig. 3, 5 und 6 die Betriebsweise dieser Ausführungsform der Rollenantriebseinheit erläutert. Im Ruhezustand, d.h. bei ausgeschaltetem Motor 3, befindet sich die Antriebsrolle 1 in ihrer unteren Ruhelage wie in Fig. 3 angedeutet. Wenn nun der Motor 3 eingeschaltet wird, wird über die beiden Getriebeverbindungen 50 die Zwischenwelle 20 in Drehung versetzt, so daß über das erste Getrieberad 60 auf das zweite Getrieberad 61 ein Antriebsmoment übertragen wird. Da jedoch das zweite Getrieberad 61 und die damit verbundene Antriebswelle 10 der Antriebsrolle 1 durch die Kupplungsvorrichtung 30 mit einem vorbestimmten Bremsmoment beaufschlagt sind, wälzt sich das zweite Getrieberad 61 anstelle einer reinen ortsfesten Rotationsbewegung am ersten Getrieberad 60 ab, so daß die Antriebsrolle 1 entlang eines kreisbogenförmigen Pfades nach oben in ihre Arbeitsstellung gegen den Boden eines über der Rollenantriebseinheit auf einer Rollenförderbahn ruhenden Frachtbehälters 100 geschwenkt wird, wie in der Fig. 5 gezeigt. Das Bremsdrehmoment an der Antriebswelle 10 ist dabei so bemessen, daß zwar die Lagerreibung und die Reibung der Getrieberäder 60 und 61, sowie die Massenträgheitsmomente der Antriebsrolle 1 und der Führungshebel 40 überwunden werden, daß also die Antriebsrolle 1 nach oben geschwenkt wird, daß jedoch keine nenneswerte Andruckkraft gegen die Unterseite des Bodens des Frachtbehälters 100 ausgeübt wird. Durch das Anstoßen der Antriebsrolle 1 am Boden des Frachtbehälters 100 wird nun die Aufwärtsbewegung entlang des kreisbogenförmigen Pfades blockiert, so daß die Abwälzbewegung der Getrieberäder 60 und 61 angehalten wird und sich die Antriebswelle 10 in Richtung des Pfeiles in der Fig. 5 zu drehen beginnt. Durch diese Drehung entsteht durch den Eingriff des Umfangs der Antriebsrolle 1 mit der Unterseite des Frachtbehälters 100 ein zusätzliches Bremsdrehmoment, das bewirkt, daß die Antriebsrolle 1 weiter nach oben geschwenkt wird, und dadurch eine Andruckkraft auf den Boden des Frachtbehälters 100 ausübt, so daß sich eine zur Antriebsrolle 1 tangential gerichtete Förderkraft aufbaut, welche den Frachtbehälter 100 in Bewegung versetzt. Der Anstieg dieser tangentialen Förderkraft, sowie der Andruckkraft am Boden des Frachtbehälters erfolgt auf diese Weise sehr sanft, so daß sich der Frachtbehälter 100 auf der Rollenförderbahn nahezu ruckfrei in Bewegung setzt. Auf diese Weise sind die Stoßbelastungskräfte welche als Reaktionskräfte von der Rollenantriebseinheit auf die tragende Struktur ausgeübt werden, sehr gering.

In der gleichen Weise wie vorstehend beschrieben, arbeitet die Rollenantriebseinheit in der umgekehrten Förderrichtung, wenn der Drehsinn des Motors 3 ausgehend vom ausgeschalteten Zustand und der Ruhestellung der Antriebsrolle 1 umgekehrt gewählt wird. In diesem Fall schwenkt die Antriebsrolle 1 in entgegengesetzter Richtung entlang des kreisbogenförmigen Pfades nach oben in ihre Antriebsstellung in Rückwärtsrichtung, wie in der Fig. 6 dargestellt.

Wenn ausgehend von der Arbeitsposition der Antriebsrolle, entweder gemäß Fig. 5 oder Fig. 6, also während des Förderbetriebes, der Motor 3 abgeschaltet wird, entfällt die Andruckkraft der Antriebsrolle 1 gegen den Behälterboden, so daß nunmehr die Antriebsrolle 1 wegen ihres Gewichtes wieder nach unten in ihre Ruheposition absinkt und der Förderbetrieb unterbrochen wird. Diese Funktionsweise ist auch beim Ausfall des Motors oder eines anderen Elements der Antriebseinheit gewährleistet, so daß im Störungsfall lediglich der Antrieb des Frachtbehälters unterbrochen wird.

Bei der Beschreibung der nun folgenden weiteren Ausführungsformen der erfindungsgemäßen Rollenantriebseinheit werden für die mit der vorstehenden Ausführungsform gleichen oder gleich wirkenden Teile die gleichen Bezugszeichen verwendet.

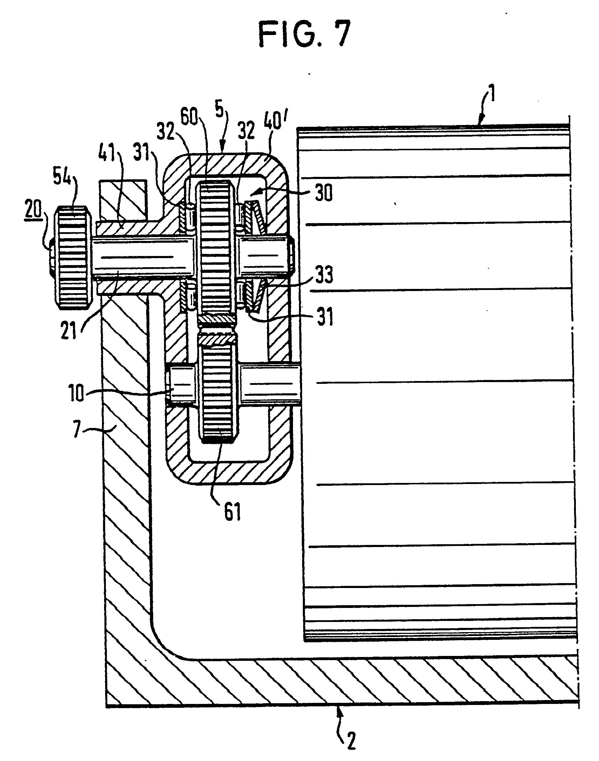

In der Fig. 7 ist eine abgewandelte Ausführungsform gezeigt, die sich von der vorstehend beschriebenen Ausführungsform lediglich darin unterscheidet, daß die Kupplungsvorrichtung 30 innerhalb des Führungshebels 40' das Bremsmoment zwischen dem ersten Getrieberad 60 und dem zugeordneten Ende des Führungshebels 40' überträgt. Die Kupplungsvorrichtung 30 ist dementsprechend mit ihren Lagerscheiben 31, den Bremsrollen 32 und der Federeinrichtung 33 um den Zwischenwellenstummel 21 herum beiderseits des ersten Getrieberades 60 angeordnet. Die Funktionsweise dieser Ausführungsform entspricht vollständig der Funktion des eingangs erläuterten Ausführungsbeispiels, da ja das Bremsmoment der Kupplungsvorrichtung 30 durch den kämmenden Eingriff der beiden Getrieberäder 60 und 61 gleichermaßen auf die Antriebswelle 10 der Antriebsrolle 1 einwirkt.

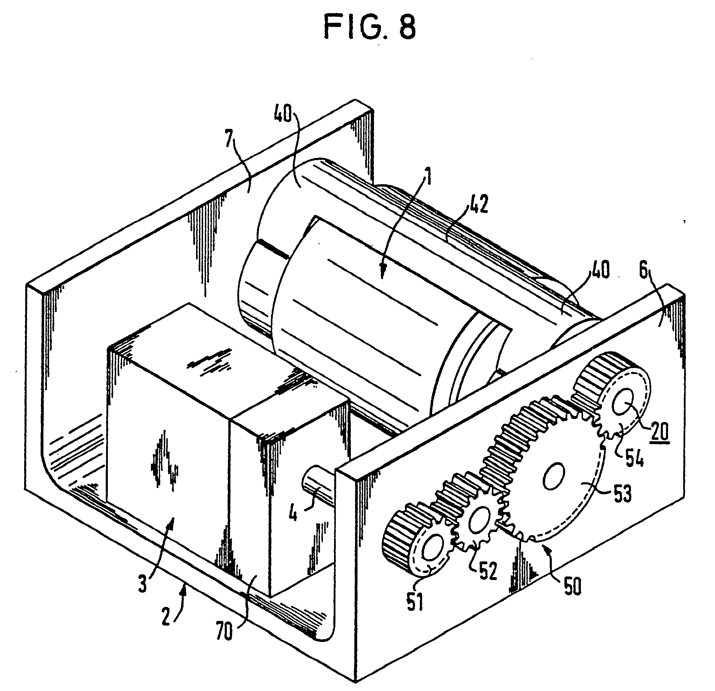

In der Fig. 8 ist eine weitere alternative Ausführungsform gezeigt, die weitgehend den beiden vorstehend beschriebenen Ausführungsbeispielen entspricht, bei der jedoch nur an einer Axialseite der Antriebsrolle an einer der Lagerplatten der Basis eine Getriebeverbindung 50 vom Motor 3 zur Zwischenwelle vorgesehen ist. Überdies ist nur in einem der beiden Führungshebel 40, nämlich dem der an der Seite der Getriebeverbindung 50 angeordnet ist, das erste und das zweite Getrieberad 60, 61 und die Kupplungsvorrichtung 30 vorgesehen. Der auf der anderen Seite der Antriebsrolle 1 angeordnete Führungshebel 40 ist lediglich mit seiner Lagerbuchse 41 in der zugeordneten Lagerplatte gelagert. Die beiden Führungshebel 40 sind durch einen die Antriebsrolle 1 überbrückenden Verbindungsbügel 42 starr miteinander verbunden. Der Verbindungsbügel 42 ist bei der in der Fig. 8 gezeigten Darstellung einstückig mit den beiden Führungshebeln 40 ausgebildet, er könnte jedoch auch als getrenntes Teil ausbegildet und mit geeigneten Befestigungsmitteln mit den beiden Führungshebeln 40 verbunden sein. Da nur an einer Seite eine Getriebeverbindung 50 vorgesehen ist, kann der Motor 3 ohne das Differentialgetriebe 80 ausgebildet sein.

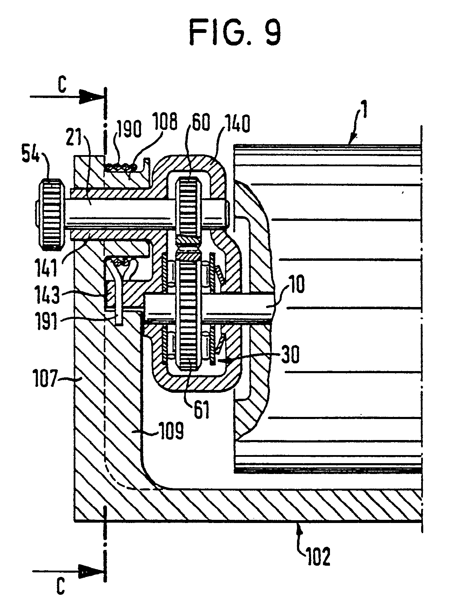

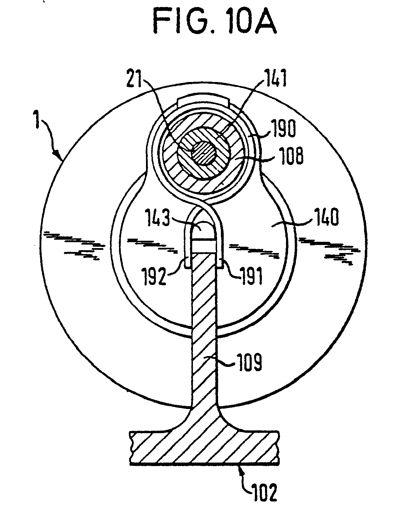

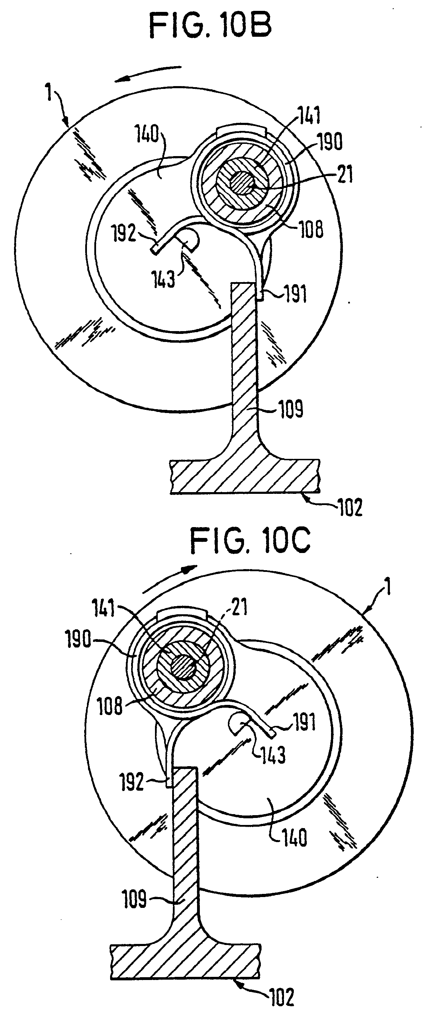

Die Fig. 9 und 10A, B, C zeigen eine weitere Ausführungsform der erfindungsgemäßen Rollenantriebseinheit, die der Ausführungsform der Fig. 1 bis 6 ähnlich ist, bei der jedoch die Führungshebel 140 mittels einer Federeinrichtung 190 in die Ruhestellung der Antriebsrolle 1 vorgespannt sind. Die Basis 102 trägt eine aufrechte Lagerplatte 107, welche an ihrer Innenseite mit einer etwa vertikalen Rippe 109 und über der Rippe 109 mit einem ringförmigen Vorsprung 108 versehen ist, dessen Bohrung von der Lagerbuchse 141 des Führungshebels 140 durchsetzt ist. Der Führungshebel 140 trägt an der Seite der Lagerbuchse 141, also an der der Lagerplatte 107 zugewandten Seite einen vorspringenden Zapfen 143, der in den Zwischenraum zwischen der Rippe 109 und dem Ringvorsprung 108 hineinragt. Um den Ringvorsprung 108 herum ist als Federeinrichtung 190 eine Schraubenfeder angeordnet, deren freie Enden als Anschlagschenkel 191, 192 an den Seitenflächen der Rippe 109 anliegen. Der Zapfen 143 des Führungshebels 140 ist in der Ruhestellung der Antriebsrolle gemäß Fig. 10A zwischen den beiden Anschlagschenkeln 191, 192 etwa über dem oberen Ende der Rippe 109 angeordnet. Wenn die Antriebsrolle aus ihrer Ruhestellung der Fig. 10A heraus in eine ihrer in den Fig. 10B und 10C gezeigten Antriebsstellungen verschwenkt wird, stützt sich der eine Anschlagschenkel der Federeinrichtung 190 jeweils an der Rippe 109 ab, während der andere Anschlagschenkel der Federeinrichtung 190 von dem Zapfen 143 des Führungshebels 140 mitgezogen wird, so daß die Federeinrichtung 190 gespannt wird und dadurch die Antriebsrolle in ihre Ruhestellung zurückzudrücken versucht. Auf diese Weise wird gewährleistet, daß die Antriebsrolle auch dann beim Abschalten des Motors in ihre Ruhestellung zurückgeführt wird, wenn beispielsweise durch Verschleißerscheinungen eine erhöhte Lagerreibung, die der Rückführung in die Ruhestellung entgegenwirken würde, auftritt. Die Bemessung der Federkraft der Federeinrichtung 190 ist derart getroffen, daß das von der Federeinrichtung auf den Führungshebel 140 ausgeübte Drehmoment kleiner ist als das von der Kupplungsvorrichtung 30 übertragene Bremsmoment, jedoch größer als das zum Rückdrehen der Getriebeanordnung 50, 60, 61 und des Motors aus der Arbeits- in die Ruhestellung benötigte Moment. Durch diese Dimensionierung der Federeinrichtung ist gewährleistet, daß die von der Feder ausgeübte Vorspannung durch das von der Kupplungseinrichtung übertragene Moment beim Einschalten des Motors 3 überwunden werden kann, so daß sich die Antriebsrolle 1 aus ihrer Ruhelage in die Arbeitsstellung bewegen kann. Die Federeinrichtung 190 kann dadurch zwar das Moment der Kupplungsvorrichtung beim Zurückschwenken der Rolle aus der Arbeits- in die Ruhestellung nicht überwinden, jedoch ist die Federeinrichtung stark genug, um die gesamte Getriebeanordnung 50, 60, 61 und den Motor 3 entgegen der ursprünglichen Drehrichtung so weit zurückzudrehen, daß die Antriebsrolle 1 in ihre Ruhestellung zurückgeführt wird.

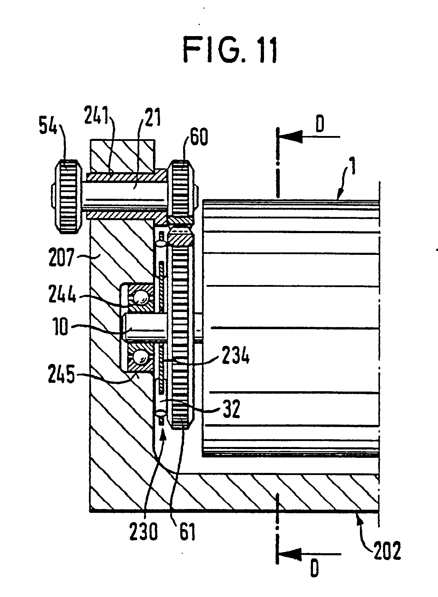

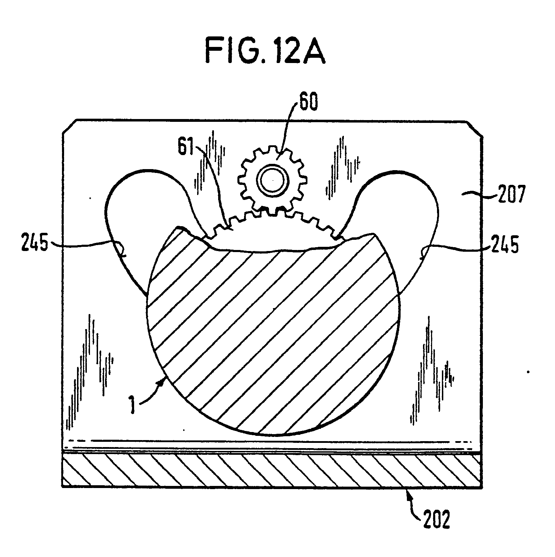

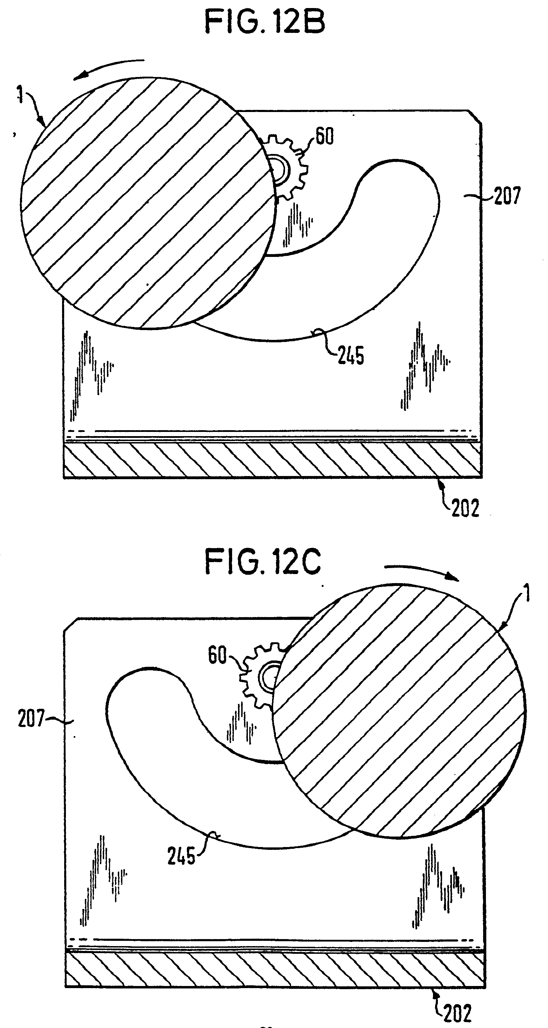

Mit Bezug auf die Fig. 11 und 12A, B, C wird nun eine weitere abgewandelte Ausführungsform beschrieben, die den vorstehenden Ausführungsformen ähnlich ist, jedoch die nachstehend erläuterten Unterschiede aufweist.

Wie die Fig. 1 zeigt, weist die Basis 202 eine aufrechtstehende Lagerplatte 207 auf, in deren oberen Teil innerhalb einer Lagerbuchse 241 der Zwischenwellenstummel 21 drehbar gelagert ist. Der Zwischenwellenstummel 21 trägt wie bei den vorstehend erläuterten Ausführungsformen an der Außenseite der Lagerplatte 207 das zur Getriebeverbindung 50 gehörige Zahnrad 54 und an der Innenseite der Lagerplatte das erste Getrieberad 60. Wie in der Fig. 11 in Verbindung mit der Fig. 12 zu sehen ist, ist an der Innenseite der Lagerplatte 207 eine kreisbogenförmige Führungsnut 245 geformt, innerhalb der ein als Wälzlager ausgebildetes Lager 244 frei verschiebbar ist. In dem Lager 244 ist die Antriebswelle der Antriebsrolle 1 drehbar gelagert. Die gegenüberliegende Lagerplatte der Basis 202 ist in entsprechender Weise ausgebildet.

Zwischen dem drehfest auf der Antriebswelle 10 der Antriebsrolle 1 angebrachten zweiten Getrieberad 61 und der benachbart zur Führungsnut 245 gelegenen Innenwand der Lagerplatte 207 ist eine Kupplungsvorrichtung 230 angeordnet, die zwischen dem zweiten Getrieberad 61 und den der Führungsnut benachbarten Wandbereichen ein Bremsmoment erzeugt. Die Kupplungsvorrichtung 230 ist als Rollenreibungskupplung ausgebildet. Bei der in der Fig. 11 gezeigten Ausführungsform besteht die Kupplungsvorrichtung 230 in vereinfachter Gestaltung lediglich aus einer Vielzahl von Bremsrollen 32, die zwischen der Seitenfläche des zweiten Getrieberades 61 und der gegenüberliegenden Wand der Lagerplatte 207 angeordnet und durch einen Käfig 234 gehalten sind. Die Funktionsweise dieser Ausführungsform entspricht derjenigen der Ausführungsform der Fig. 1 bis 6, so daß für den Fachmann eine weitergehende Erläuterung entbehrlich ist. Wie in den Fig. 12A, 12B und 12C gezeigt ist, kann die Antriebsrolle 1 ausgehend von ihrer Ruhestellung gemäß Fig. 12A beim Einschalten des Motors entlang der Führungsnut 245 in eine der in den Fig. 12B und 12C dargestellten Arbeitsstellungen verschwenkt werden.

Bei einer nicht gezeigten Abwandlung der Ausführung der Fig. 11 kann die als Rollenreibungskupplung zwischen dem zweiten Getrieberad 61 und der Innenwand der Lagerplatte 207 angeordnete Kupplungsvorrichtung weggelassen werden. In diesem Fall ist die Antriebswelle 10 der Antriebsrolle 1 ohne besonderes Lager 244 in der Führungsnut drehbar und verschiebbar gelagert, so daß die Reibungsflächen der Antriebswelle 10 an den Wänden der Führungsnut für das erforderliche Bremsmoment sorgen.

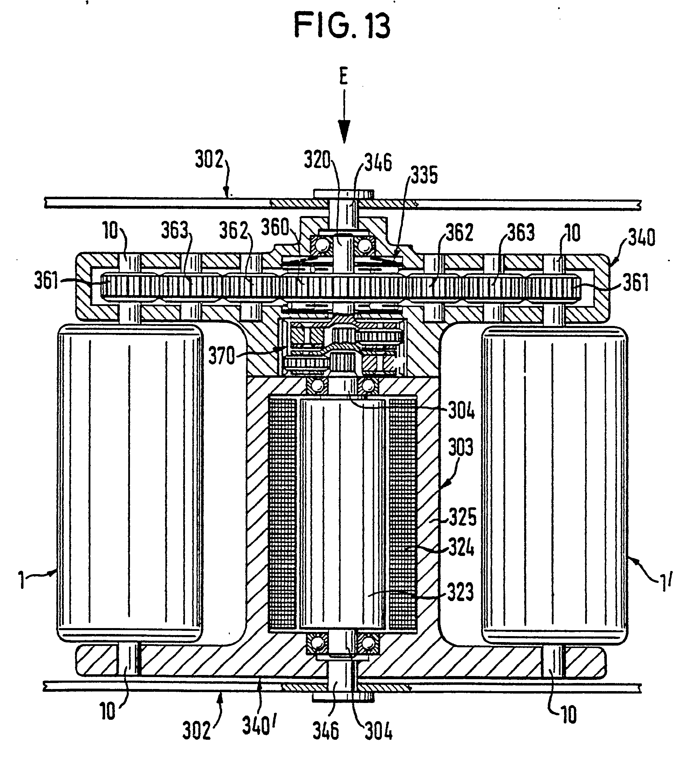

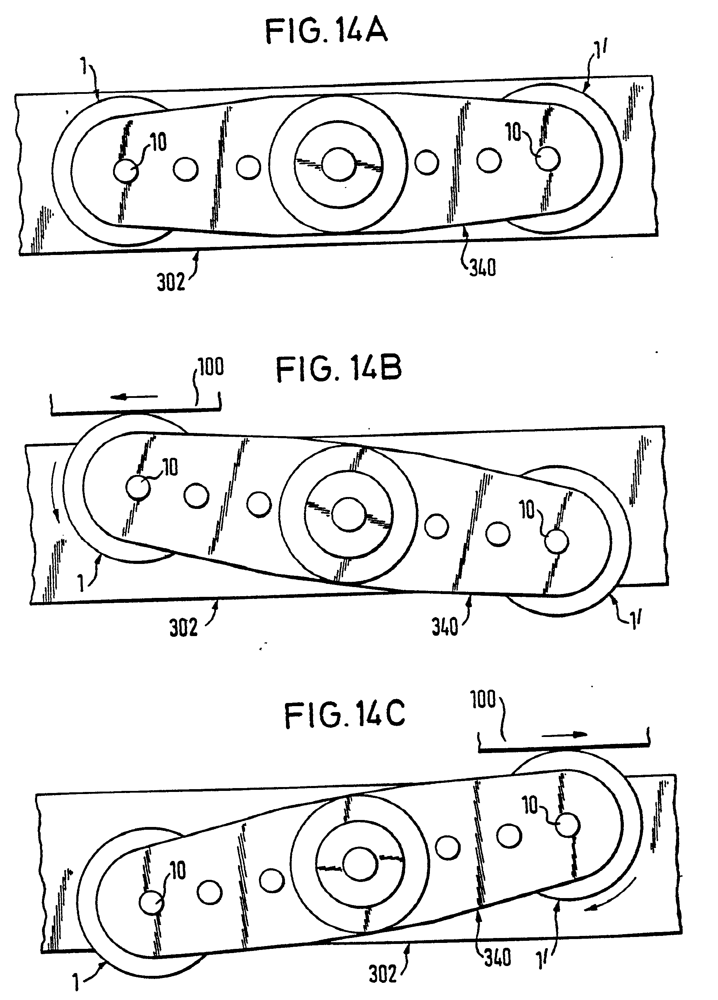

Mit Bezug auf die Fig. 13 und 14A, B, C wird nun eine weitere abgewandelte Ausführungsform der erfindungsgemäßen Rollenantriebseinheit beschrieben. Wie in der Fig. 13 in teilweise geschnittener Darstellung in Draufsicht gezeigt ist, weist diese Ausführung zwei parallel im Abstand zueinander angeordnete Führungshebel 340 und 340' auf, von denen jeder als zweiarmiger, in seiner Mitte schwenkbar gelagerter Hebel ausgebildet ist. Jeweils an den freien Enden der beiden Führungshebel 340, 340' ist jeweils eine Antriebsrolle 1 und 1' drehbar gelagert. In der Mitte zwischen den beiden parallel im Abstand zueinander angeordneten Antriebsrollen 1, 1' ist ein Motor 303 angeordnet, dessen Gehäuse 325 mit den beiden zweiarmigen Führungshebeln 340, 340' starr verbunden ist. Jeder der beiden Führungshebel 340, 340' ist jeweils mittels eines Lagerzapfens 346 schwenkbar an einer etwa senkrecht zur Ebene der Zeichnung angeordneten Lagerplatte der Basis 302 schwenkbar bezüglich der Basis 302 gelagert. Die Basis wird bei dieser Ausführungsform vorzugsweise unmittelbar durch die längslaufenden Seitenwände einer Profilschiene der zum Transport der Gegenstände 100 vorgesehenen Rollenförderbahn gebildet. Dies hat den Vorteil, daß der für den Einbau der Rollenantriebseinheit erforderliche Raumbedarf auf dem durch die lichte Weite der Profilschiene der Rollenförderbahn gegebenen Minimum gehalten ist.

Die beiden Antriebsrollen 1, 1' sind in der gleichen Weise aufgebaut, wie vorstehend mit Bezug auf die übrigen Ausführungsformen der erfindungsgemäßen Rollenantriebseinheit im einzelnen erläutert.

Der in der Fig. 13 unten gelegene zweiarmige Führungshebel 340' umfaßt eine senkrecht zu den Längsachsen der beiden Antriebsrollen 1, 1' angeordnete, als zweiarmiger Hebel auf dem Lagerzapfen 346 gelagerte Platte auf, die an ihrer einen Seitenfläche zentral zum Lagerzapfen 346 einen Hohlkörper trägt, der als Gehäuse 325 des Motors 303 ausgebildet ist und starr mit dem anderen Führungshebel 340 verbunden ist. In diesem Gehäuse 325 des Motors sind, wie in der Zeichnung dargestellt ist, der Stator 324 und der Rotor 323 des Motors aufgenommen, wobei der Stator 324 des Motors starr mit dem Gehäuse 325 verbunden ist. Die Antriebswellen 304 des Motors sind drehbar in dem Gehäuse 325 gelagert. Der zweite Führungshebel 340 ist als zweiarmiger Hebel in Gestalt eines länglichen Hohlkörpers ausgebildet, der etwa in seiner Mitte auf dem Lagerzapfen 346 bezüglich der Basis 302 schwenkbar gelagert ist. In der Mitte der dem Motor zugewandten Seitenfläche des Führungshebels 340 ist ein etwa ringförmiger hohler Vorsprung angeformt, der mit seinem freien Ende starr mit dem Gehäuse 325 des Motors verbunden ist. Im Inneren dieses ringförmigen Vorsprungs ist ein als Planetengetriebe ausgebildetes Getriebe 370 angeordnet, dessen Eingang mit der zugeordneten Antriebswelle des Motors 304 gekoppelt ist, während der Ausgang mit der zentral im Führungshebel 340 drehbar gelagerten Zwischenwelle 320 gekoppelt ist. Dieses Getriebe ist derart ausgebildet, daß sich die Zwischenwelle 320 gegensinnig zur Antriebswelle 304 des Motors 303 dreht. Auf der Zwischenwelle im Innenraum des Führungshebels 340 ist drehfest ein erstes Getrieberad 360 angebracht, das über in jedem der beiden Arme des Führungshebels drehbar gelagerte Freilaufgetrieberäder 362 und 363 jeweils ein zweites Getrieberad 361 gegensinnig antreibt. Die beiden zweiten Getrieberäder 361 sind jeweils drehfest mit den Antriebswellen 10 der beiden Antriebsrollen 1 bzw. 1' verbunden. Zwischen den Innenwänden des hohlen Führungshebels 340 und den Seitenflächen des ersten Getrieberads 360 ist zentral zur Zwischenwelle 320 eine Bremse 335 angeordnet. Diese Bremse überträgt zwischen der Zwischenwelle 320 bzw. dem ersten Getrieberad 360 und dem Führungshebel 340 ein vorbestimmtes Bremsdrehmoment. Die Bremse 335 ist als Rollenreibungsbremse ausgebildet, deren Aufbau der Kupplungsvorrichtung 30 der Fig. 4 entspricht. Es wird zur Erläuterung auf den diesbezüglichen Teil der Beschreibung verwiesen.

Im folgenden wird nun die Funktionsweise der vorstehend beschriebenen Ausführungsform erläutert. Im Ruhezustand, d.h. bei abgeschaltetem Motor 303, befindet sich die Rollenantriebseinheit im Gleichgewichtszustand in der Stellung der Fig. 14A. In dieser Stellung liegt die Längsrichtung der Führungshebel etwa parallel zur Ebene der Rollenförderbahn, so daß keine der Antriebsrollen 1, 1' mit dem Boden eines zu befördernden Gegenstandes 100 im Eingriff steht. Wenn nun der Motor 303 eingeschaltet wird, tendiert zunächst die Antriebswelle 304 des Motors dazu, sich in entsprechende Drehung zu versetzen. Da dieser Drehung der Antriebswelle 304 des Motors jedoch durch das Getriebe 370, die Reibung der Getrieberäder 360, 362, 363 und 361, ferner durch die Bremse 335 und schließlich durch das Masseträgheitsmoment der beiden Antriebsrollen 1, 1' ein erheblicher Widerstand entgegengesetzt wird, dreht sich zunächst die Antriebswelle des Motors 304 bezüglich der Basis nicht, sondern es dreht sich statt dessen der Stator 324 des Motors in entgegengesetzter Richtung. Da der Stator 324 über das Gehäuse 325 starr mit den beiden Führungshebeln 340, 340' verbunden ist, werden durch diese Drehung die beiden Führungshebel um die Lagerzapfen 346 bezüglich der Basis 302 derart verschwenkt, daß die Rollenantriebseinheit aus der Ruhestellung in eine ihrer Arbeitsstellungen verschwenkt wird, wie in den Fig. 14B bzw. 14C gezeigt. In diesen Arbeitsstellungen wird jeweils eine der Antriebsrollen 1 oder 1' gegen die Unterseite des auf der Förderbahn ruhenden Gegenstandes 100 gedrückt, so daß die Schwenkbewegung angehalten wird. Das bedeutet, daß nunmehr dem Stator des Motors ein so hoher Widerstand gegen Drehung entgegengesetzt wird, daß er sich nicht mehr weiterdrehen kann, so daß statt des Stators 324 sich nunmehr der Rotor 323 und damit die Antriebswelle 304 des Motors zu drehen beginnt und die Antriebsrolle 1 über die entsprechende Getriebeverbindung in Drehung versetzt wird und ihrerseits im Eingriff mit dem Boden des Behälters diesen antreibt.

Die jeweilige Arbeitsstellung der Rollenantriebseinheit in Vorwärtsrichtung gemäß Fig. 14B oder in Rückwärtsrichtung gemäß Fig. 14C wird durch entsprechende Ansteuerung der Antriebsrichtung des Motors ausgewählt.

Beim Abschalten des Motors ausgehend aus einer der beiden Arbeitsstellungen kippt die Rollenantriebseinheit in ihre Ruhestellung der Fig. 14A zurück. Dieses Zurückschwenken kann grundsätzlich dadurch bewirkt werden, daß beim Abschalten der Rotor des Motors wegen seiner Massenträgheit noch ein bißchen weiterdreht, so daß die Getriebeverbindung zur Antriebsrolle unter Druckspannung versetzt wird. Durch diese Druckspannung verformt sich das Getriebe wegen seiner Elastizität geringfügig und es wird ein gewisses Maß an Arbeitsenergie in dieser Verformung des Getriebes gespeichert. Wenn nun der Rotor des Motors zur Ruhe kommt, entlädt sich diese gespeicherte Elastizitätsenergie der Getriebeverbindung dadurch, daß der Stator 324 des Motors, der ja starr mit den beiden Führungshebeln verbunden ist, etwas entgegen der ursprünglichen Drehrichtung des Rotors schwenkt, so daß die vorher in der Arbeitsstellung befindliche Antriebsrolle 1 oder 1' nach unten in ihre Ruhestellung schwenkt.

Falls die Wirkung des vorstehend beschriebenen Effektes im Einzelfall nicht ausreichen sollte, kann das Absenken der Antriebsrollen aus der Arbeits- in die Ruhestellung auch dadurch bewirkt werden, daß man den Motor nach dem Stillstand kurz in Gegenrichtung drehen läßt.

Alternativ hierzu kann auch eine Federeinrichtung entsprechend der vorstehend mit Bezug auf die Fig. 9 beschriebenen Ausführungsform vorgesehen werden, die die Rollenantriebseinheit in ihre Ruhestellung gemäß Fig. 14A vorspannt.

Bei der vorstehend beschriebenen Ausführungsform der Fig. 13 ist, wie erläutert, zwischen dem ersten Getrieberad 360 und dem zugeordneten Bereich des Führungshebels 340 eine Bremse 335 angeordnet, welche der anfänglichen Drehung der Zwischenwelle 320 ein genügend großes Bremsmoment entgegensetzt, um die Verschwenkung der Führungshebel aus der Ruhestellung in die Arbeitsstellung zu fördern, wie beschrieben. Diese Bremse 335 kann gemäß einer abgewandelten Ausführungsform auch ersatzlos weggelassen werden, falls sich im Einzelfall zeigt, daß der der Zwischenwelle 320 entgegenwirkende Widerstand der Getrieberäder und der Massenträgheit der Antriebsrollen zum Verschwenken der Führungshebel aus der Ruhein die Arbeitsstellung ausreicht. Die zur Übertragung des benötigten Drehmoments auf die Führungshebel erforderliche Kupplungsvorrichtung ist bei einer derartigen Ausführungsform ohne die Bremse 335 ausschließlich durch die elektromagnetische Kupplung zwischen dem Rotor und dem Stator des Motors 303 gebildet.

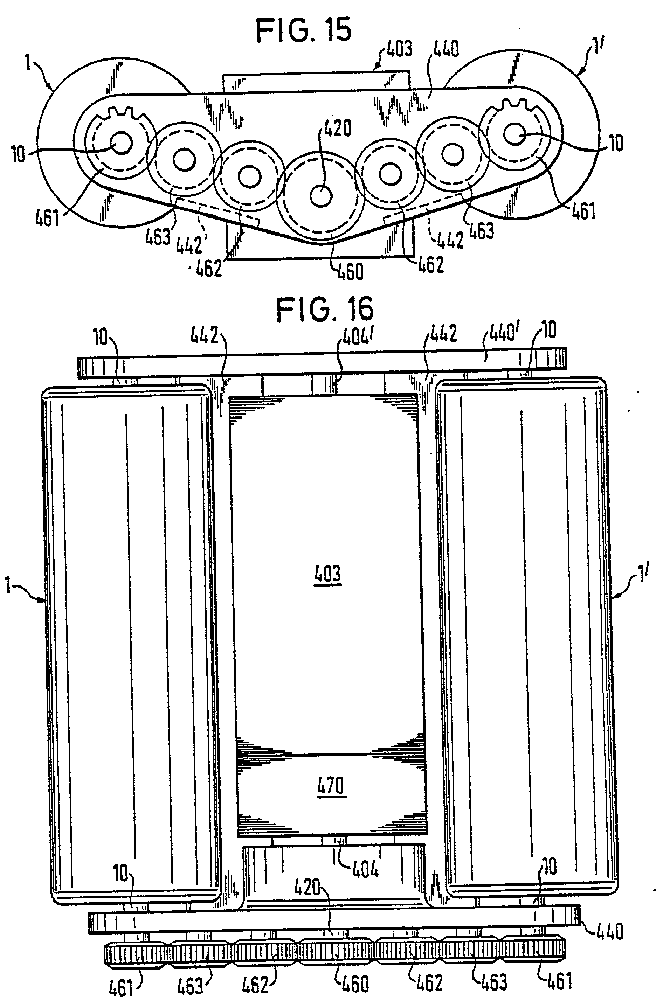

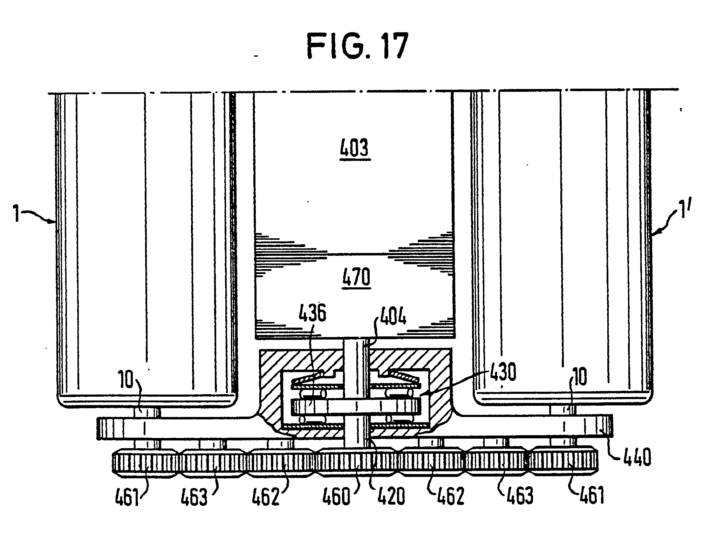

Mit Bezug auf die Fig. 15 bis 17 wird nun eine weitere Ausführungsform der erfindungsgemäßen Rollenantriebseinheit beschrieben. Diese Rollenantriebseinheit weist ebenso wie die vorhergehende Ausführungsform zwei Führungshebel 440 und 440' auf, die im Abstand zueinander parallel angeordnet sind. Quer zu diesen Führungshebeln 440 und 440' sind im Abstand parallel zueinander zwei Antriebsrollen 1 und 1' vorgesehen, die in den freien Enden der beiden Führungshebel 440, 440' drehbar gelagert sind. Die beiden Führungshebel 440, 440' sind durch zwei querverlaufende Verbindungsbügel 442, siehe Fig. 15 und 16, starr miteinander verbunden. Zwischen den beiden Antriebsrollen 1, 1' ist ein Motor 403 vorgesehen, dessen Antriebswelle 404 an der dem Führungshebel 440 zugewandten Seite fest mit einer Zwischenwelle 420 gekoppelt ist. An der dem anderen Führungshebel 440' zugewandten Seite ist die Antriebswelle des Motors 404' frei drehbar in einer Bohrung des Führungshebels 440' gelagert. Der Motor 403 umfaßt ein Untersetzungsgetriebe 470, das die Rotorwelle des Motors (nicht gezeigt) mit der Antriebswelle 404 verbindet.

Der Führungshebel 440 ist ebenfalls in seiner Mitte auf der Zwischenwelle 420 bezüglich der Basis schwenkbar gelagert. Der Motor selbst ist mit der Basis fest verbunden.

Wie in der Fig. 16 zu sehen ist, ist der Führungshebel 440 als längliche Platte ausgebildet, die mit Bohrungen zur Lagerung der Antriebswellen der Antriebsrollen 1, 1' und der Antriebswelle 404' des Motors versehen ist. Die Gestalt dieses Führungshebels 440' entspricht der in der Fig. 15 gezeigten Umrißgestalt des Führungshebels 440.

Der Führungshebel 440 weist ebenfalls eine ähnlich dem Führungshebel 440' geformte längliche Platte auf und ist zudem in seinem mittleren Bereich mit einem hohlen Vorsprung versehen, wie insbesondere in der Fig. 17 zu sehen ist. Im Hohlraum dieses Vorsprungs ist eine Kupplungsvorrichtung 430 aufgenommen, welche zwischen der Zwischenwelle 420 und dem Führungshebel 440 ein Drehmoment überträgt. Der Aufbau dieser Kupplungsvorrichtung entspricht im wesentlichen dem Aufbau der mit Bezug auf die Fig. 4 beschriebenen Kupplungsvorrichtung 30, jedoch mit dem Unterschied, daß in der vorliegenden Ausführungsform das erste Getrieberad durch eine Kupplungsscheibe 436 ersetzt ist, die drehfest mit der Zwischenwelle 420 verbunden ist.

An der den Antriebsrollen 1, 1' und dem Motor 403 abgewandten Außenseite des Führungshebels 440 ist auf dem durch den Führungshebel 440 nach außen hindurchragenden Ende der Zwischenwelle 420 ein erstes Getrieberad 460 drehfest angebracht, das jeweils über zwei am zugeordneten Hebelarm des Führungshebels 440 auf Zapfen gelagerte Freilaufgetrieberäder 462 und 463 mit einem zweiten Getrieberad 461 gekoppelt ist, das auf der durch das freie Ende des Führungshebels 440 hindurchragenden Antriebswelle 10 der jeweiligen Antriebsrolle 1 bzw. 1' drehfest angeordnet ist. Auf diese Weise werden die beiden Antriebsrollen 1, 1' jeweils gegensinnig zur Rotation des ersten Getrieberades 460 angetrieben.

Beim Einschalten des Motors 403 beginnt sich die mit der Antriebswelle 404 des Motors gekoppelte Zwischenwelle 420 zu drehen und überträgt über die Kupplungsvorrichtung 430 ein Drehmoment auf den Führungshebel 440 und den damit starr verbundenen Führungshebel 440', so daß die Führungshebel bezüglich der Basis verschwenkt werden und eine der beiden Antriebsrollen 1 oder 1' aus der Ruhestellung in die Arbeitsstellung in Eingriff mit dem darüber befindlichen Boden des Behälters angehoben wird. Dadurch wird die Schwenkbewegung der Führungshebel 440, 440' angehalten. Da sich jedoch die Zwischenwelle 420 durch den Antrieb des Motors fortwährend weiterdreht, wird nunmehr das Antriebsmoment des Motors über die Getriebeverbindung 460, 462, 463 und 461 auf die Antriebswelle 10 der Antriebsrollen übertragen, so daß diese in Rotation versetzt werden und die in die Arbeitsstellung angehobene Antriebsrolle 1 oder 1' den auf der Förderbahn befindlichen Gegenstand antreibt. Die Funktionsweise entspricht somit im wesentlichen der Arbeitsweise der vorstehend beschriebenen Ausführungsform, auf die im übrigen verwiesen wird.

Abweichend von der dargestellten Ausführung der Fig. 15 bis 17 kann zusätzlich noch vorgesehen sein, daß die Zwischenwelle 420 oder die Antriebswelle 404 des Motors, sowie die Antriebswelle 404' des Motors in (nicht dargestellten) Lagerplatten der Basis drehbar abgestützt sind, so daß nicht wie bei der dargestellten Ausführung der Motor 403 allein alle Kräfte auf die Basis übertragen muß. Auf diese Weise kann insbesondere eine Überbelastung der Rotorwelle des Motors und ihrer Lager im Motorgehäuse vermieden werden.

**Patentansprüche**

1. Rollenantriebseinheit zum Antrieb von auf einer Förderbahn bewegbaren Gegenständen (100), mit wenigstens einer von einem Motor (3) über wenigstens eine das Antriebsdrehmoment übertragende Getriebeanordnung (50, 60, 61) drehend antreibbaren Antriebsrolle (1), die mit ihrer Antriebswelle (10) drehbar in einer Führungseinrichtung (40) gelagert ist, mittels der sie bezüglich einer Basis (2) auf einem kreisbogenförmigen Bewegungspfad verschwenkbar ist, und die mittels einer Steuereinrichtung auf dem kreisbogenförmigen Bewegungspfad zwischen einer unteren Ruhestellung und einer oberen Antriebsstellung, in der sie mit der Unterseite des anzutreibenden Gegenstandes (100) im Eingriff steht, bewegbar ist, wobei die Steuereinrichtung eine zur Übertragung eines begrenzten Drehmoments zwischen der Getriebeanordnung (50, 60, 61) und der Führungseinrichtung (40) ausgebildete Kupplungsvorrichtung (30) umfaßt und der Grenzwert des Drehmoments größer ist als das zur Anhebung der Antriebsrolle (1) in die Arbeitsstellung erforderliche Antriebsdrehmoment, und wobei die Getriebeanordnung (50, 60, 61) ein vom Motor (3) angetriebenes erstes Getrieberad (60) umfaßt, das ein an der Antriebswelle (10) der Antriebsrolle (1) drehfest angebrachtes zweites Getrieberad (61) gegensinnig antreibt, dadurch gekennzeichnet, daß die Welle (20) des ersten Getrieberades (60) bezüglich der Basis (2) ortsfest drehbar gelagert ist, und daß der von der Führungseinrichtung (40) erzwungene kreisbogenförmige Bewegungspfad der Antriebsrolle (1) konzentrisch zur Drehachse der Welle (20) des ersten Getrieberades (60) angeordnet ist.

2. Rollenantriebseinheit nach Anspruch 1, dadurch gekennzeichnet, daß als Führungseinrichtung wenigstens an einer Axialseite der Antriebsrolle (1) ein Führungshebel (40) vorgesehen ist, dessen eines Ende konzentrisch zur Drehachse des ersten Getrieberades (60) ortsfest zur Basis (2) schwenkbar gelagert ist, und in dessen freiem Ende die Antriebswelle (10) der Antriebsrolle drehbar gelagert ist.

3. Rollenantriebseinheit nach Anspruch 2, dadurch gekennzeichnet, daß das erste Getrieberad (60) drehfest auf einer parallel im Abstand zur Antriebswelle (10) der Antriebsrolle angeordneten Zwischenwelle (20) angebracht ist, und daß das eine Ende des Führungshebels (40) schwenkbar auf der Zwischenwelle (20) gelagert ist.

4. Rollenantriebseinheit nach einem der Ansprüche 2 oder 3, dadurch gekennzeichnet, daß an beiden Axialseiten der Antriebsrolle (1) jeweils ein Führungshebel (40) vorgesehen ist.

5. Rollenantriebseinheit nach einem der Ansprüche 2 bis 4, dadurch gekennzeichnet, daß wenigstens einer der Führungshebel (40) als länglicher Hohlkörper ausgebildet ist, in welchem jeweils das erste Getrieberad (60) und das an der Antriebswelle (10) angebrachte zweite Getrieberad (61) aufgenommen sind.

6. Rollenantriebseinheit nach Anspruch 5, dadurch gekennzeichnet, daß in wenigstens einem der Führungshebel (40) eine ein Drehmoment zwischen der Getriebeanordnung (50, 60, 61) und der Führungseinrichtung übertragende Kupplungsvorrichtung (30) aufgenommen ist.

7. Rollenantriebseinheit nach einem der Ansprüche 4 bis 6, dadurch gekennzeichnet, daß nur an einer Axialseite der Antriebsrolle (1) eine das Antriebsdrehmoment vom Motor (3) auf die Antriebsrolle (1) übertragende Getriebeanordnung (50, 60, 61) vorgesehen ist, und daß die beiden Führungshebel (40) mittels eines die Antriebsrolle (1) überbrückenden Verbindungsbügels(42) starr gekoppelt sind.

8. Rollenantriebseinheit nach einem der Ansprüche 4 bis 6, dadurch gekennzeichnet, daß an beiden Axialseiten der Antriebsrolle (1) eine das Antriebsdrehmoment vom Motor (3) auf die Antriebsrolle (1) übertragende Getriebeanordnung (50, 60, 61) vorgesehen ist.

9. Rollenantriebseinheit nach Anspruch 8, dadurch gekennzeichnet, daß die Getriebeanordnung (50, 60, 61) an der einen Seite vom Motor (3) über ein Differentialgetriebe (80) angetrieben ist, dessen Eingang mit dem Rotor des Motors (3) und dessen erster Ausgang mit der Getriebeanordnung (50, 60, 61) gekoppelt sind, und dessen zweiter Ausgang mit einer Stellvorrichtung zum Ausgleich von Asymmetrien der beiden Getriebeanordnungen verbunden ist.

10. Rollenantriebseinheit nach einem der vorhergehenden Ansprüche, dadurch gekennzeichnet, daß das erste und das zweite Getrieberad (60, 61) Zahnräder sind.

11. Rollenantriebseinheit nach Anspruch 10, dadurch gekennzeichnet, daß das erste Getrieberad (60) über n Paare von Freilaufzahnrädern (362, 363) mit dem zweiten Getrieberad (61) gekoppelt ist, wobei n = 0,1,2....

12. Rollenantriebseinheit nach einem der vorhergehenden Ansprüche, dadurch gekennzeichnet, daß als Basis (2) ein Rahmen mit zwei im Abstand zueinander aufrechtstehenden Lagerplatten (6, 7) vorgesehen ist, und daß in wenigstens einer dieser Lagerplatten (6, 7) eine vom Motor (3) getriebene, das erste Getrieberad (61) drehfest tragende Zwischenwelle (20) drehbar gelagert ist.

13. Rollenantriebseinheit nach einem der vorhergehenden Ansprüche, dadurch gekennzeichnet, daß das Gehäuse des Motors (3) bewegungsfest an der Basis (2) befestigt ist.

14. Rollenantriebseinheit nach Anspruch 12 oder 13, dadurch gekennzeichnet, daß die Zwischenwelle (20) in zwei getrennte, jeweils in den Lagerplatten (6, 7) gelagerte Zwischenwellenstummel (21) unterteilt ist, und daß wenigstens einer dieser Zwischenwellenstummel (21) vom Motor (3) angetrieben ist.

15. Rollenantriebseinheit nach einem der vorhergehenden Ansprüche, dadurch gekennzeichnet, daß die Kupplungsvorrichtung (30) zur Übertragung eines von der Relativdrehgeschwindigkeit der gekoppelten Elemente unabhängigen Drehmoments ausgebildet ist.

16. Rollenantriebseinheit nach einem der Ansprüche 1 bis 14, dadurch gekennzeichnet, daß die Kupplungsvorrichtung als Fluid-Reibungskupplung ausgebildet ist.

17. Rollenantriebseinheit nach einem der Ansprüche 1 bis 14, dadurch gekennzeichnet, daß die Kupplungsvorrichtung als elektromagnetische Kupplung ausgebildet ist.

18. Rollenantriebseinheit nach einem der Ansprüche 1 bis 15, dadurch gekennzeichnet, daß die Kupplungsvorrichtung (30) als Rollenreibungskupplung ausgebildet ist.

19. Rollenantriebseinheit nach einem der Ansprüche 15 bis 18, dadurch gekennzeichnet, daß die Kupplungsvorrichtung (30) zur Übertragung des Drehmoments zwischen dem ersten Getrieberad (60) und dem zugeordneten Ende des Führungshebels (40') angeordnet ist.

20. Rollenantriebseinheit nach einem der Ansprüche 15 bis 18, dadurch gekennzeichnet, daß die Kupplungsvorrichtung (30) zur Übertragung des Drehmoments zwischen dem zweiten Getrieberad (61) und dem zugeordneten Ende des Führungshebels (40) angeordnet ist.

21. Rollenantriebseinheit nach Anspruch 19, dadurch gekennzeichnet, daß als Kupplungsvorrichtung (30) innerhalb des als Hohlkörper ausgebildeten Führungshebels (40') zwei die Welle (20) des ersten Getrieberades (60) umgebende und beiderseits des mit der Welle (20) verbundenen ersten Getrieberades (60) angeordnete Lagerscheiben (31) vorgesehen sind, daß zwischen jeder Lagerscheibe (31) und der jeweils gegenüberliegenden Seitenfläche des ersten Getrieberades (60) eine Vielzahl von umfangsmäßig verteilten, jeweils im Winkel schräg zur Radialrichtung angeordneten Bremsrollen (32) angeordnet ist, daß eine der Lagerscheiben (31) an der Innenwand des Führungshebels (40') abgestützt ist, und daß die andere Lagerscheibe (31) mittels einer an der gegenüberliegenden Innenwand abgestützten Federeinrichtung (33) gegen die Bremsrollen (32) gedrückt ist.

22. Rollenantriebseinheit nach Anspruch 20, dadurch gekennzeichnet, daß als Kupplungsvorrichtung (30) innerhalb des als Hohlkörper ausgebildeten Führungshebels (40) zwei die Antriebswelle (10) der Antriebsrolle (1) umgebende und beiderseits des mit der Antriebswelle (10) verbundenen zweiten Getrieberads (61) angeordnete Lagerscheiben (31) vorgesehen sind, daß zwischen jeder Lagerscheibe (31) und der jeweils gegenüberliegenden Seitenfläche des zweiten Getrieberades (61) eine Vielzahl von umfangsmäßig verteilten, jeweils im Winkel schräg zur Radialrichtung angeordneten Bremsrollen (32) angeordnet ist, daß eine der Lagerscheiben (31) an der Innenwand des Führungshebels (40) abgestützt ist, und daß die andere Lagerscheibe (31) mittels einer an der gegenüberliegenden Innenwand abgestützten Federeinrichtung (33) gegen die Bremsrollen (32) gedrückt ist.

23. Rollenantriebseinheit nach einem Ansprüche 2 bis 22, dadurch gekennzeichnet, daß die Führungshebel als zweiarmige Hebel (340) ausgebildet sind, die jeweils etwa in ihrer Mitte konzentrisch zur Drehachse des ersten Getrieberades (360) schwenkbar gelagert sind, daß in den beiden freien Enden der zweiarmigen Hebel (340) jeweils drehbar eine Antriebsrolle (1, 1') gelagert ist, an deren Antriebswelle (10) jeweils ein zweites Getrieberad (361) drehfest angebracht ist, und daß die beiden Antriebsrollen (1, 1') von dem ersten Getrieberad (360) gegensinnig angetrieben sind.

24. Rollenantriebseinheit nach Anspruch 23, dadurch gekennzeichnet, daß die beiden Antriebsrollen (1, 1') parallel im Abstand zueinander angeordnet sind.

25. Rollenantriebseinheit nach Anspruch 23 oder 24, dadurch gekennzeichnet, daß an beiden Axialseiten der beiden Antriebsrollen (1,1') jeweils ein zweiarmiger Hebel (340, 340') vorgesehen ist.

26. Rollenantriebseinheit nach einem der Ansprüche 23 bis 25, dadurch gekennzeichnet, daß nur an einer Axialseite der beiden Antriebsrollen (1, 1') an dem zweiarmigen Hebel (340) das erste und zweite Getrieberad (360, 361) vorgesehen sind.

27. Rollenantriebseinheit nach Anspruch 25 oder 26, dadurch gekennzeichnet, daß die beiden zweiarmigen Hebel (340, 340') über ein Verbindungselement (325; 442) starr gekoppelt sind.

28. Rollenantriebseinheit nach einem der Ansprüche 23 bis 27, dadurch gekennzeichnet, daß die Kupplungsvorrichtung (430) zur Übertragung des Drehmoments zwischen dem ersten Getrieberad bzw. der damit verbundenen Zwischenwelle (420) und dem benachbarten mittleren Bereich des zweiarmigen Hebels (440) angeordnet ist.

29. Rollenantriebseinheit nach einem der Ansprüche 23 bis 28, dadurch gekennzeichnet, daß der Motor (403) zwischen den beiden Antriebsrollen (1,1') und den zweiarmigen Hebeln (440, 440') angeordnet ist und an seinen beiden Axialseiten herausragende, mit seiner Rotorwelle gekoppelte Antriebswellen (404, 404') aufweist, auf denen als Zwischenwellen die zweiarmigen Hebel (440, 440') schwenkbar gelagert sind, und von denen wenigstens eine ein erstes Getrieberad (460) drehfest trägt.

30. Rollenantriebseinheit nach Anspruch 29, dadurch gekennzeichnet, daß die Zwischenwellen (420; 320) drehbar in Lagerplatten der Basis abgestützt sind.

31. Rollenantriebseinheit nach Anspruch 29 oder 30, dadurch gekennzeichnet, daß das Gehäuse des Motors (403) an der Basis festgelegt ist.

32. Rollenantriebseinheit nach Anspruch 29 oder 30, dadurch gekennzeichnet, daß der Motor (303) ein Getriebe (370) umfaßt, das wenigstens eine das erste Getrieberad (360) tragende Zwischenwelle (320) gegensinnig zur Drehung der Rotorwelle (304) des Motors antreibt, und daß das Gehäuse (325) des Motors (303) bezüglich der Basis (302) zumindest in einem begrenzten Drehwinkelbereich drehbar, jedoch drehfest mit dem zweiarmigen Hebel (340; 340') verbunden ist.

33. Rollenantriebseinheit nach Anspruch 32, dadurch gekennzeichnet, daß als Kupplungsvorrichtung zur Übertragung des begrenzten Drehmoments das erste Gettrieberad (360) über die zugeordnete Zwischenwelle (320), das Getriebe (370), den Rotor (323) und das mit dem Stator (324) des Motors (303) verbundene Gehäuse (325) elektromagnetisch mit dem zweiarmigen Hebel (340, 340') gekoppelt ist.

34. Rollenantriebseinheit nach einem der vorhergehenden Ansprüche, dadurch gekennzeichnet, daß die Führungshebel (140) mittels einer Federeinrichtung (190) in die Ruhestellung der Antriebsrolle (1) vorgespannt sind.

35. Rollenantriebseinheit nach Anspruch 34, dadurch gekennzeichnet, daß die Federeinrichtung (190) eine die das erste Getrieberad (60) tragende Zwischenwelle (21) umschließende Schraubenfeder (190) umfaßt, deren freie Enden (190, 192) einerseits an der Lagerplatte (107) der Basis (102) bzw. andererseits an dem zuordneten Führungshebel (140) angreifen.

36. Rollenantriebseinheit nach Anspruch 34 oder 35, dadurch gekennzeichnet, daß das von der Federeinrichtung (190) ausgeübte Drehmoment kleiner ist als das von der Kupplungsvorrichtung (30) übertragene Drehmoment, jedoch größer als das zum Rückdrehen der Getriebeanordnung (50, 60, 61) und des Motors (3) aus der Arbeits- in die Ruhestellung benötigte Moment.

37. Rollenantriebseinheit nach einem der vorhergehenden Ansprüche, dadurch gekennzeichnet, daß die Basis (202) zwei aufrechte, im Abstand etwa parallel zueinander gehaltene Führungsplatten (207) aufweist, zwischen denen die Antriebsrolle (1) quer angeordnet ist, und daß als Führungseinrichtung an den einander zugewandten Seitenflächen der Lagerplatten (207) entsprechend dem Bewegungspfad der Antriebsrolle (1) kreisbogenförmige, zur Zwischenwelle (21) konzentrische Führungsnuten (245) geformt sind, in denen die Enden der Antriebswelle (10) der Antriebsrolle (1) frei verschiebbar, jedoch gegen Rotation mit dem vorbestimmten Drehmoment der Kupplungsvorrichtung (230) gebremst sind.

38. Rollenantriebseinheit nach Anspruch 37, dadurch gekennzeichnet, daß die Kupplungsvorrichtung durch die Reibungsflächen der Antriebswelle der Antriebsrolle (1) gebildet ist.

39. Rollenantriebseinheit nach Anspruch 37, dadurch gekennzeichnet, daß die Kupplungsvorrichtung (30) zwischen dem auf der Antriebswelle (10) der Antriebsrolle (1) angebrachten zweiten Getrieberad (61) und den den Führungsnuten (245) benachbarten Flächen der Lagerplatte (207) angeordnet ist und zwischen diesen Teilen das begrenzte Drehmoment überträgt.

40. Rollenentriebseinheit nach einem der vorhergehenden Ansprüche, dadurch gekennzeichnet, daß die Antriebsrolle (10) einen zylindrischen starren Körper (11) und einen die Umfangsfläche einhüllenden Mantel (12) aus elastischem, reibungsbehaftetem Material, wie Polyurethan oder Nitrilkautschuk, umfaßt.

41. Rollenantriebseinheit nach einem der vorhergehenden Ansprüche, dadurch gekennzeichnet, daß die Antriebswelle (10) der Antriebsrolle (1) in zwei getrennte, in einer zentralen Durchgangsbohrung (13) der Antriebsrolle (1) drehfest, jedoch axial verschiebbar gelagerte Wellenstummel unterteilt ist, deren im Abstand zueinander angeordnete innere Enden gegeneinander nach außen federvorgespannt sind.

**Claims**

1. Roller drive unit, for the drive of articles (100) movable on a conveyor track, with at least one drive roller (1), which is rotationally drivable by a motor (3) through at least one gear arrangement (50, 60, 61) transmitting the driving torque, is rotatably borne by its drive shaft (10) in a guide equipment (40), by means of which it is pivotable with respect to a base (2) on a circularly arcuate movement path, and which is movable by means of a control equipment on the circularly arcuate movement path between a lower rest setting and an upper drive setting, in which it stands in engagement with the underside of the article (100) to ba driven, where in the control equipment comprises a clutch device (30) constructed for the transmission of a limited torque between the gear arrangement (50, 60, 61) and the guide equipment (40) and the limit value of the torque is greater than the driving torque required for the raising of the drive roller (1) into the operative setting and wherein the gear arrangement (50, 60, 61) comprises a first gear wheal (60), which is driven by the motor (3) and drives in opposite sense a second gear wheel (61) mounted secure against rotation at the drive shaft (10) of the drive roller (1), characterised thereby, that the shaft (20) of the first gear wheel (60) is rotatably borne in fixed location relative to the base (2) and that the circularly arcuatea movement path, constrained by the guide equipment (40), of the drive roller (1) is arranged concentrically with the rotational axis of the shaft (20) of the first gear wheel (60).

2. Roller drive unit according to claim 1, characterised thereby, that a guide lever (40), the one end of which is pivotably borne concentrically with the rotational axis of the first gear wheel (60) and in fixed location relative to the base (2) and in the free end of which the drive shaft (10) of the drive roller (1) is rotatably borne, is provided as guide equipment at least at one axial side of the drive roller (1).

3. Roller drive unit according to claim 2, characterised thereby, that the first gear wheel (60) is mounted secure against rotation on an intermediate shaft (20) arranged parallelly to and at a spacing from the drive shaft (10) of the drive roller (1) and that tha one end of the guide lever (40) is pivotably borne on the intermediate shaft (20).

4. Roller drive unit according to one of the claims 2 or 3, characterised thereby, that a respective guide lever (40) is providad at both axial sides of the drive roller (1).

5. Roller drive unit according to one of the claims 2 to 4, characterised thereby, that at least one of the guide levers (40) is constructed as elongate hollow body, in which the first gear wheel (60) and the second gear wheel (61) mounted at tha drive shaft (10) are received each time.

6. Roller drive unit according to claim 5, characterised thereby, that a clutch device (30), which transmits a torque between the gear arrangement (50, 60, 61) and the guide equipment, is received in at least one of the guide levers (40).

7. Roller drive unit according to one of the claims 4 to 6, characterised thereby, that a gear arrangement (50, 60, 61), which transmits the driving torque from the motor (3) to the drive roller (1), is provided at only one axial side of the drive roller (1) and that both the guide levers (40) are rigidly coupled by means of a connecting strap (42) bridging over the drive roller (1).

8. Roller drive unit according to one of the claims 4 to 6, characterised thereby, that a gear arrangament (50, 60, 61), which transmits the driving torque from the motor (3) to the drive roller (1), is provided at both axial sides of the drive roller (1).

9. Roller drive unit according to claim 8, characterised thereby, that the gear arrangament (50, 60, 61) is driven at the one side by the motor (3) through a differential gear (80), the input of which is coupled with the rotor of the motor (3), the first output of which is coupled with the gear arrangement (50, 60, 61) and the second output of which is connected with a setting device for the equalisation of assymmetries of both the gear arrangements.

10. Roller drive unit according to one of the preceding claims, characterised thereby, that the first and the second gear wheel (60, 61) are spur wheels.

11. Roller drive unit according to claim 10, characterised thereby, that the first gear wheel (60) is coupled through n pairs of freewheel spur wheels (362, 363) with the second gear wheel (61), wherein n = 0, 1, 2....

12. Roller drive unit according to one of the preceding claims, characterised thereby, that a frame with two bearing plates (6, 7), which stand upright at a spacing each from the other, is provided as base (2) and that an intermediate shaft (20), which is driven by the motor (3) and carries the first gear wheel (60) secure against rotation, is rotatably borne in at least one of these bearing plates (6, 7).

13. Roller drive unit according to one of the preceding claims, characterised thereby, that the housing of the motor (3) is fastened at the base (2) to be secure against movement.

14. Roller drive unit according to claim 12 or 13, characterised thereby, that the intermediate shaft (20) is subdivided into two separate intermediate shaft stubs (21) each borne in the bearing plates (6, 7) and that at least one of these intermediate shaft stubs (21) is driven by the motor (3).

15. Roller drive unit according to one of the preceding claims, characterised thereby, that the clutch device (30) is constructed for the transmission of a torque which is independent of the relative rotational speed of the coupled elements.

16. Roller drive unit according to one of the claims 1 to 14, characterised thereby, that the clutch device is constructed as fluid friction clutch.

17. Roller drive unit according to one of the claims 1 to 14, characterised thereby, that the clutch device is constructed as electromagnetic clutch.

18. Roller drive unit according to one of the claims 1 to 15, characterised thereby, that the clutch device (30) is constructed as roller friction clutch.

19. Roller drive unit according to one of the claims 15 to 18, characterised thereby, that the clutch device (30) is arranged for the transmission of the torque between the first gear wheel (60) and the associated end of the guide lever (40').

20. Roller drive unit according to one of the claims 15 to 10, characterised thereby, that the clutch device (30) is arranged for the transmission of the torque between the second gear wheel (61) and the associated end of the guide lever (40).

21. Roller drive unit according to claim 19, characterised thereby, that two bearing discs (31), which are arranged to both sides of the first gear wheel (60) connected with the shaft (20) and surround the shaft (20) of the first gear wheel (60), are provided as clutch device (30) within the guide lever (40') constructed as hollow body, that a plurality of brake rollers (32), which are distributed over the circumference and each arranged at an angle inclined to the radial direction, is arranged between each bearing disc (31) and the respective opposite side face of the first gear wheel (60), that one of the bearing discs (31) is supported at the inside wall of the guide lever (40') and that the other bearing disc (31) is pressed against the brake rollers (32) by means of a spring equipment (33) supported at the opposite inside wall.

22. Roller drive unit according to claim 20, characterised thereby, that two bearing discs (31), which are arranged to both sides of the second gear wheel (61) connected with the drive shaft (10) and surround the drive shaft (10) of the drive roller (1), are provided as clutch device (30) within the guide lever (40) constructed as hollow body, that a plurality of brake rollers (32), which are distributed over the circumference and each arranged at an angle inclined to the radial direction, is arranged between each bearing disc (31) and the respective opposite side face of the second gear wheel (61), that one of the bearing discs (31) is supported at the inside wall of the guide lever (40) and that the other bearing disc (31) is pressed against the brake rollers (32) by means of a spring equipment (33) supported at the opposite inside wall.

23. Roller drive unit according to one of the claims 2 to 22, characterised thereby, that the guide levers are constructed as two-armed levers (340), which are each pivotably borne in about their centre concentrically with the rotational axis of the first gear wheel (360), that a respective drive roller (1, 1') is rotatably borne in each of both free ends of the two-armed levers (340), that a second gear wheel (361) is mounted secure against rotation at the drive shaft (10) of the drive rollers (1, 1') and that both the drive rollers (1, 1') are driven in opposite sense by the first gear wheel (360).

24. Roller drive unit according to claim 23, characterised thereby, that both tha drive rollers (1, 1') are arranged parallelly at a spacing each from the other.

25. Roller drive unit according to claim 23 or 24, characterised thereby, that a respective two-armed lever (340, 340') is provided at each of both axial sides of both the drive rollers (1, 1').

26. Roller drive unit according to one of the claims 23 to 25, characterised thereby, that the first and the second gear wheel (360, 361) are provided at the two-armed lever (340) at only one axial side of both the drive rollers (1, 1').

27. Roller drive unit according to claim 25 or 26, characterised thereby, that both the two-armed levers (340, 340') are rigidly coupled through a connecting element (325; 442).

28. Roller drive unit according to one of the claims 23 to 27, characterised thereby, that the clutch device (430) is arranged for the transmission of the torque between the first gear wheel or the intermediate shaft (420) connected therewith and the neighbouring central region of the two-armed lever (440).

29. Roller drive unit according to one of the claims 23 to 28, characterised thereby, that the motor (403) is arranged between both the drive rollers (1, 1') and the two-armed levers (340, 340') and displays drive shafts (404, 404'), which are coupled with its rotor shaft and project out at both its axial sides and on whith the two-armed levers (340', 340') are pivotably borne as intermediate shafts and of which at least one carries a first gear wheel (460) to be secure against rotation.

30. Roller drive unit according to claim 29, characterised thereby, that the intermediate shafts (420; 320) are rotatably supported in bearing plates of the base.

31. Roller drive unit according to claim 29 or 30, characterised thereby, that the housing of the motor (403) is fixedly located at the base.

32. Roller drive unit according to claim 29 or 30, characterised thereby, that the motor (303) comprises a gear (370), which drives at least an intermediate shaft (320) carrying the first gear wheel (360) in opposite sense to the rotation of the rotor shaft (304) of the motor, and that the housing (325) of the motor (303) is rotatable at least in a limited range of rotational angle with respect to the base (302), yet connected secure against rotation with the two-armed lever (340; 340').

33. Roller drive unit according to claim 32, characterised thereby, that the first gear wheel (360) is electromagnetically coupled - as clutch device for the transmission of the limited torque - through the associated intermediate shaft (320), the gear (370), the rotor (323) and the housing (325), which is connected with the stator (324) of the motor (303), with the two-armed lever (340; 340').

34. Roller drive unit according to one of the preceding claims, characterised thereby, that the guide levers (140) are biassed by means of a spring equipment (190) into the rest setting of the drive roller (1).

35. Roller drive unit according to claim 34, characterised thereby, that the spring equipment (190) comprises a helical spring (190), which surrounds the intermediate shaft (21) carrying the first gear wheel (60) and the free ends (190, 192) of which engage on the one hand at the bearing plate (107) of the base (102) or on the other hand at the associated guide lever (140).

36. Roller drive unit according to claim 34 or 35, characterised thereby, that the torque exerted by the spring equipmant (190) is smaller than the torque transmitted by the clutch device (30), yet greater than the torque needed for the turning of the gear arrangement (50, 60, 61) and the motor (3) out of the operative setting back into the rest setting.

37. Roller drive unit according to one of the preceding claims, characterised thereby, that the base (202) displays two upright guide plates (207), which are held at a spacing and about parallally each to the other and between which the drive roller (1) is arranged obliquely, and that guide grooves (245), which are concentric with the intermediate shaft (21) and circularly arcuate in correspondence with the path of movement of the drive roller (1) and in which the ends of the drive shaft (10) of the drive roller (1) are freely displaceable, yet braked against rotation by the predetermined torque of the clutch device (230), are shaped as guide equipment at the mutually facing side faces of the bearing plates (207).

38. Roller drive unit according to claim 37, characterised thereby, that the clutch device is formed by the friction surfaces of the drive shaft of the drive roller (1).

39. Roller drive unit according to claim 37, characterised thereby, that the clutch device (30) is arranged between the second gear wheel (61) mounted on the drive shaft (10) of the drive roller (1) and those surfaces of the bearing plate (207), which are adjacent to the guide grooves (245), and transmits the limited torque between these parts.

40. Roller drive unit according to one of the preceding claims, characterised thereby, that the drive roller (10) comprises a cylindrical rigid body (11) and a shell (12) enveloping the circumferential surface and being of elastic, friction-causing material such as polyurethane or nitrile rubber.

41. Roller drive unit according to one of the preceding claims, characterised thereby, that the drive shaft (10) of the drive roller (1) is subdivided into two separate shaft stubs, which are borne secure against rotation, yet axially displaceable in a central passage bore (13) of the drive roller (1) and the inner ends of which are arranged at a spacing each from the other and spring-biassed outwardly each against the other.

**Revendications**

1. Unité d'entraînement à galets pour l'entraînement d'objets (100) mobiles sur une voie de transport munie d'au moins un galet d'entraînement (1) pouvant être entraîné en rotation par un moteur (3) par l'intermédiaire d'au moins une disposition de transmission (50, 60, 61) transmettant le couple d'entraînement, galet qui est monté de manière à pouvoir tourner avec son arbre d'entraînement (10) dans un dispositif de guidage (40) du moyen duquel on peut le faire pivoter relativement à une base (2) sur une trajectoire en arc de cercle et qui peut être déplacé au moyen d'un dispositif de commande sur la trajectoire en arc de cercle entre une position inférieure de repos et une position supérieure d'entraînement dans laquelle il est en coopération avec le côté inférieur de l'objet à entraîner (100), le dispositif de commande comprenant un dispositif d'accouplement (30) constitué pour la transmission d'un couple limité entre disposition de transmission (50, 60, 61) et le dispositif de guidage (40) et la valeur limite du couple étant plus grande que le couple d'entraînement nécessaire pour soulever le galet d'entraînement (1) à la position de travail et la disposition de transmission (50, 60, 61) comprenant une première roue de transmission (60) entraînée par le moteur (3), qui entraîne en sens opposé une deuxième roue de transmission (61) disposée de façon solidaire en rotation sur l'arbre d'entraînement (10) du galet d'entraînement (1) caractérisée en ce que l'arbre (20) de la première roue de transmission (60) est monte de manière a tourner en position fixe relativement à la base (2) et en ce que la trajectoire en arc de cercle du galet d'entraînement (1), imposée par le dispositif de guidage (40) est disposée concentriquement à l'axe de rotation de l'arbre (20) de la première roue de transmission (60).

2. Unité d'entraînement à galets selon la revendication 1, caractérisée en ce que comme dispositif de guidage est prévu, au moins à un côté axial du galet d'entraînement (1), un levier de guidage (40) dont une extrémité est montée de manière à pouvoir pivoter concentriquement à l'axe de rotation de la première roue de transmission (60), en position fixe relativement à la base (2) et dans l'extrémité libre duquel l'arbre d'entraînement (10) du galet d'entraînement (1) est monté de manière à pouvoir tourner.

3. Unité d'entraînement à galets selon la revendication 2, caractérisée en ce que la première roue de transmission (60) est disposée de façon solidaire en rotation sur un arbre intermédiaire (20) disposé parallèlement avec espacement à l'arbre d'entraînement (10) du galet d'entraînement (1), et en ce que l'une des extrémités du levier de guidage (40) est montée de manière à pouvoir pivoter sur l'arbre intermédiaire (20).

4. Unité d'entraînement à galets selon l'une des revendications 2 et 3, caractérisée en ce qu'à chacun des deux côtés axiaux du galet d'entraînement (1) est prévu un levier de guidage (40).

5. Unité d'entraînement à galets selon l'une des revendications 2 à 4, caractérisée en ce qu'au moins un des leviers de guidage (40) est constitué, sous forme de corps creux allongé dans lequel sont chaque fois logées la première roue de transmission (60) et la deuxième roue de transmission (61) disposée sur l'arbre d'entraînement (10).

6. Unité d'entraînement à galets selon la revendication 5, caractérisée en ce que dans au moins un des leviers de guidage (40) est logé un dispositif d'accouplement (30) transmettant un couple entre la disposition de transmission (50, 60, 61) et le dispositif de guidage.

7. Unité d'entraînement à galets selon l'une des revendications 4 à 6, caractérisée en ce que seulement à un côté axial du galet d'entraînement (1) est prévue une disposition de transmission (50, 60, 61) transmettant le couple d'entraînement du moteur (3) au galet d'entraînement (1), et en ce que les deux leviers de guidage (40) sont couplés rigidement au moyen d'un étrier de liaison franchissant le galet d'entraînement (1).

8. Unité d'entraînement à galets selon l'une des revendications 4 à 6, caractérisée en ce qu'aux deux côtés axiaux du galet d'entraînement (1) est prévue une disposition de transmission (50, 60, 61) transmettant le couple d'entraînement du moteur (3) au galet d'entraînement (1).

9. Unité d'entraînement à galets selon la revendication 8, caractérisée en ce que la disposition d'entraînement (50, 60, 61) est entraînée à l'un des côtés par le moteur, par l'intermédiaire d'un différentiel (80), dont l'entrée est accouplée au rotor du moteur (3), et la première sortie à la disposition de transmission (50, 60, 61), et dont la deuxième sortie est reliée à un dispositif de réglage pour la compensation d'asymétrie des deux dispositions de transmission.

10. Unité d'entraînement à galets selon l'une des revendications précédentes, caractérisée en ce que la première et la deuxième roues de transmission (60, 61) sont des roues dentées.

11. Unité d'entraînement à galets selon la revendication 10, caractérisée en ce que la première roue de transmission (60) est accouplée par l'intermédiaire de n paires de roues dentées de roue libre (362, 363) à la deuxième roue de transmission (61), n valant 0, 1, 2....

12. Unité d'entraînement à galets selon l'une des revendications précédentes, caractérisée en ce que comme base (2) est prévu un châssis muni de deux plaques de paliers (6, 7) dressées avec espacement entre elles, et en ce que dans au moins une de ces plaques de palier (6, 7) est monté de manière à pouvoir tourner un arbre intermédiaire (20) entraîné par le moteur (3), portant de façon solidaire en rotation la première roue de transmission (61).

13. Unité d'entraînement à galets selon l'une des revendications précédentes, caractérisée en ce que le carter du moteur (3) est fixé de façon immobile à la base (2).

14. Unité d'entraînement à galets selon l'une des revendications 12 et 13, caractérisée en ce que l'arbre intermédiaire (20) est subdivisé en deux tronçons d'arbre intermédiaire séparés (21), montés chacun dans les plaques de paliers (6, 7), et en ce qu'au moins un de ces tronçons d'arbre intermédiaire (21) est entraîné par le moteur (3)

15. Unité d'entraînement à galets selon l'une des revendications précédentes, caractérisée en ce que le dispositif d'accouplement (30) est conçu pour transmettre un couple indépendant de la vitesse de rotation relative des éléments accouplés.

16. Unité d'entraînement à galets selon l'une des revendications 1 à 14, caractérisée en ce que le dispositif d'accouplement est conçu sous forme d'accouplement à friction à fluide.

17 Unité d'entraînement à galets selon l'une des revendications 1 à 14, caractérisée en ce que le dispositif d'accouplement est conçu sous forme d'accouplement électromagnétique.

18. Unité d'entraînement à galets selon l'une des revendications 1 à 15, caractérisée en ce que le dispositif d'accouplement est conçu sous forme d'accouplement à friction à galets.

19. Unité d'entraînement à galets selon l'une des revendications 15 à 18, caractérisée en ce que le dispositif d'accouplement (30) est disposé pour la transmission du couple entre la première roue de transmission (60) et l'extrémité adjointe du levier de guidage (40').

20. Unité d'entraînement à galets selon l'une des revendications 15 à 18, caractérisée en ce que le dispositif d'accouplement (30) est disposé pour la transmission du couple entre la deuxième roue de transmission (61) et l'extrémité adjointe du levier de guidage (40).

21. Unité d'entraînement à galets selon la revendication 19, caractérisée en ce que comme dispositif d'accouplement (30) sont prévus, à l'intérieur du levier de guidage (40') conçu sous forme de corps creux, deux disques de palier (31) entourant l'arbre (20) de la première roue de transmission (60) et disposés de part et d'autre de la première roue de transmission (60) reliée à l'arbre (20), en ce qu'entre chaque disque de palier (31) et la surface latérale chaque fois opposée de la première roue de transmission (60) sont disposés de multiples galets de freinage (32) répartis circonférentiellement, disposés chacun obliquement par rapport à la direction radiale, en ce que l'un des disques de palier (31) est appuyé sur la paroi intérieure du levier de guidage (40'), et en ce que l'autre disque de palier (31) est poussé contre les galets de freinage (32) au moyen d'un dispositif de ressort (33) appuyé contre la paroi intérieure opposée.

22. Unité d'entraînement à galets selon la revendication 20, caractérisée en ce que comme dispositif d'accouplement (30) sont prévus, à l'intérieur du levier de guidage (40) conçu sous forme de corps creux, deux disques de palier (31) entourant l'arbre d'entraînement (10) du galet d'entraînement (1) et disposés de part et d'autre de la deuxième roue de transmission (61) reliée à l'arbre d'entraînement (10), en ce qu'entre chaque disque de palier (31) et la surface latérale chaque fois opposée de la deuxième roue de transmission (61) sont disposés de multiples qalets de freinage (32) répartis circonférentiellement, disposés chacun obliquement par rapport à la direction radiale, en ce que l'un des disques de palier (31) est appuyé sur la paroi intérieure du levier de guidage (40), et en ce que l'autre disque de palier (31) est poussé contre les galets de freinage (32) au moyen d'un dispositif de ressort (33) appuyé contre la paroi intérieure opposée.

23. Unité d'entraînement à galets selon l'une des revendications 2 à 22, caractérisée en ce que les leviers de guidage sont conçus sous forme de leviers à deux bras (340) qui sont montés chacun, à peu près en leur milieu, de manière à pouvoir pivoter concentriquement à l'axe de rotation de la première roue de transmission (360), en ce que dans chacune des deux extrémités libres des leviers à deux bras (340) est monté de manière à pouvoir tourner un galet d'entraînement (1, 1') sur l'arbre d'entraînement (10) duquel est chaque fois disposée de façon solidaire en rotation, une deuxième roue de transmission (361) et en ce que les deux rouleaux d'entraînement (1, 1') sont entraînés en sens opposé par la première roue de transmission (360).

24. Unité d'entraînement à galets selon la revendication 23, caractérisée en ce que les deux galets d'entraînement (1, 1') sont disposés parallèlement avec espacement entre eux.

25. Unité d'entraînement à galets selon l'une des revendications 23 et 24, caractérisée en ce qu'à chacun des deux côtés axiaux des deux galets d'entraînement (1, 1') est prévu un levier à deux bras (340, 340').

26. Unité d'entraînement à galets selon l'une des revendications 23 à 25, caractérisée en ce que seulement à un côté axial des deux galets d'entraînement (1, 1') sont prévues, sur le levier à deux bras (340), la première et la deuxième roues de transmission (360, 361).

27. Unité d'entraînement à galets selon l'une des revendications 25 et 26, caractérisée en ce que les deux leviers à deux bras (340, 340') sont accouplés rigidement par l'intermédiaire d'un élément de liaison (325; 442).

28. Unité d'entraînement à galets selon l'une des revendications 23 à 27, caractérisée en ce que le dispositif d'accouplement (430) est disposé pour la transmission du couple entre la première roue de transmission ou l'arbre intermédiaire (420) relié à celle-ci et la région centrale voisine du levier à deux bras (440).

29. Unité d'entraînement à qalets selon l'une des revendications 23 à 28, caractérisée en ce que le moteur (403) est disposé entre les deux galets d'entraînement (1, 1') et les leviers à deux bras (440, 440') et présente à ses deux côtés axiaux des arbres d'entraînement en saillie (404, 404') accouplés à son arbre de rotor, sur lesquels, en tant qu'arbres intermédiaires, sont montés de manière à pivoter les leviers à deux bras (440, 440') et dont au moins un porte de façon solidaire en rotation une première roue de transmission (460).

30. Unité d'entraînement à galets selon la revendication 29 caractérisée en ce que les arbres intermédiaires (420; 320) sont appuyés de manière à pouvoir tourner dans des plaques de palier de la base.

31. Unité d'entraînement à galets selon l'une des revendications 29 et 30, caractérisée en ce que le carter du moteur (403) est fixe à la base.

32. Unité d'entraînement à galets selon l'une des revendications 29 et 30, caractérisée en ce que le moteur (303) comprend une transmission (370) qui entraîne en sens inverse de l'arbre de rotor (304) du moteur au moins un arbre intermédiaire (320) portant la première roue de transmission (360), et en ce que le carter (325) du moteur (303) peut tourner au moins dans une marge limitée d'angle de rotation relativement à la base (302) mais est relié de façon solidaire en rotation au levier à deux bras (340; 340').

33. Unité d'entraînement à galets selon la revendication 32, caractérisée en ce que comme dispositif d'accouplement pour la transmission du couple limité, la première roue de transmission (360) est couplée électromagnétiquement au levier à deux bras (340, 340') par l'intermédiaire de l'arbre intermédiaire adjoint (320), de la transmission (370), du rotor (323) et du carter (325) relié au stator (324) du moteur (303).

34. Unité d'entraînement à galets selon l'une des revendications précédentes, caractérisée en ce que les leviers de guidage (140) sont préchargés vers la position de repos du galet d'entraînement (1) au moyen d'un dispositif de ressort (190).

35. Unité d'entraînement à galets selon la revendication 34, caractérisée en ce que le dispositif de ressort (190) comprend un ressort a boudin (190) entourant l'arbre intermédiaire (21) portant la première roue de transmission (60) et dont les extrémités libres (190, 192) s'appliquent, d'une part, à la plaque de palier (107) de la base et, d'autre part, au levier de guidage adjoint (140).

36. Unité d'entraînement à galets selon l'une des revendications 34 et 35, caractérisée en ce que le couple exercé par le dispositif de ressort (190) est plus petit que le couple transmis par le dispositif d'accouplement (30) mais plus grand que le couple nécessaire pour faire tourner en sens inverse le dispositif de transmission (50, 60, 61) et le moteur (3), de la position de travail à celle de repos.

37. Unité d'entraînement à galets selon l'une des revendications précédentes, caractérisée en ce que la base (202) présente deux plaques de guidage dressées (207), maintenues à peu près parallèlement entre elles avec espacement, entre lesquelles le galet d'entraînement (1) est disposé transversalement, et en ce que comme dispositif de guidage, sur les surfaces latérales tournées l'une vers l'autre des plaques de palier (207) sont formées, conformément à la trajectoire du galet d'entraînement (1), des rainures de guidage en arc de cercle (245), concentriques à l'arbre intermédiaire (21), dans lesquelles les extrémités de l'arbre d'entraînement (10) du galet d'entraînement (1) peuvent coulisser librement mais sont freinées contre la rotation avec le couple prédéterminé du dispositif d'accouplement (230).

38. Unité d'entraînement à galets selon la revendication 37, caractérisée en ce que le dispositif d'accouplement est formé par les surfaces de frottement de l'arbre d'entraînement du galet d'entraînement (1).

39. Unité d'entraînement à galets selon la revendication 37, caractérisée en ce que le dispositif d'accouplement (30) est disposé entre la deuxième roue de transmission (61) disposée sur l'arbre d'entraînement (10) du galet d'entraînement (1) et les surfaces de la plaque de paliers (207) voisines des rainures de guidage (245) et transmet entre ces parties le couple limité.

40. Unité d'entraînement à galets selon l'une des revendications précédentes, caractérisée en

21

ce que le galet d'entraînement (10) comprend un corps rigide cylindrique (11) et une enveloppe (12) en matière élastique présentant un frottement comme le caoutchouc nitrile, enveloppant la surface circonférentielle.

41. Unité d'entraînement à galets selon l'une des revendications précédentes, caractérisée en ce que l'arbre d'entraînement (10) du galet d'entraînement (1) est subdivisé en deux tronçons d'arbre séparés, montés dans un perforation centrale de passage (13) du galet d'entraînement (1) de façon solidaire en rotation mais de manière à pouvior coulisser axialement et dont les extrémités intérieures disposées avec espacement entre elles sont préchargées par ressort l'une contre l'autre vers l'extérieur.

# FIG.1

# FIG.2

# FIG.3

# F I G. 4

# FIG. 5

# FIG. 6

## FIG. 7

# FIG. 8

# FIG. 9

# FIG. 10A

## FIG. 10B

## FIG. 10C

# FIG. 11

# FIG.12A

# FIG. 12B

1

60

207

245

202

# FIG. 12C

207

60

1

245

202

# FIG. 13

# FIG. 14A

# FIG. 14B

# FIG. 14C

## FIG. 15

## FIG. 16

# FIG. 17